# EUROPEAN PATENT SPECIFICATION

(11) **EP 0 370 050 B1**
(45) Date of publication and mention of the grant of the patent: **18.05.1994**
(21) Application number: 88906558.7
(22) Date of filing: 08.07.1988
(51) Int. Cl.: B29C 45/04, B29C 45/32, B29C 45/54, B29C 45/56, B29C 45/57

(54) **HOLD-PRESSURE CONTROL AND CLAMPING IN STACKED MULTI-PARTING MOLDING SYSTEM HAVING DESYNCHRONIZED INJECTION PERIODS**
NACHDRUCKSTEUERUNG UND SCHLIESSEN GESTAPELTER FORMEN EINES MEHRTEILIGEN SYSTEMS MIT ZEITLICH AUSEINANDERLIEGENDEN EINSPRITZPERIODEN
COMMANDE DE PRESSION ET SERRAGE DANS UN SYSTEME DE MOULAGE A PLUSIEURS PARTIES EMPILEES A PERIODES D'INJECTION DESYNCHRONISEES

(30) Priority: 08.07.1987 US 70850; 02.11.1987 US 115902
(43) Date of publication of application: 30.05.1990
(73) Proprietor: PRIMTEC, Rancho Santa Fe, CA 92067 (US)
(72) Inventor: SORENSEN, Jens, Ole, Rancho Santa Fe, CA 92067 (US)
(74) Representative: Wilson, Nicholas Martin
(86) International application number: US8802330
(87) International publication number: WO8900103

(56) References cited:
- US-A- 2 781 547
- US-A- 3 417 433
- PATENT ABSTRACTS OF JAPAN, vol. 8, no. 240 (M-336)[1677], 6th November 1984;& JP-A-59 120 432 (DAINIPPON INSATSU K.K.) 12-07-1984

## Description

### BACKGROUND OF THE INVENTION

The present invention generally pertains to molding systems and methods and is particularly directed to control of hold pressure and clamping in a stacked multi-parting molding system having desynchronized injection periods.

A stacked multi-parting molding system includes at least three molding blocks disposed for movement along a common axis with respect to each other. Molding cavities are defined between adjacent molding blocks. In a desynchronized stacked multi-parting molding system that includes left, center, and right molding blocks for defining a left molding cavity between the left and center molding blocks and a right molding cavity between the center and right molding blocks, positioning means move the left, center and right molding blocks along the common axis with respect to each other in such a sequence that the opening and closing of the left and right molding cavities may be desynchronized. Desynchronized stacked multi-parting molding systems are described in United States Patents Nos. 4,400,431, 4,464,327 and 4,539,171, all to Jens Ole Sorensen and 4,146,600 to Elly et al. Desynchronized injection of plastic material into the molding cavities may take place when both mold cavities are closed, as well as when one molding cavity is open and the other mold cavity is closed.

Hold pressure is the pressure applied to plastic material injected into a molding cavity of an injection molding system after the molding cavity is initially filled with plastic by an injection system. Hold pressure is applied to force additional plastic material into the molding cavity as the initially injected material shrinks in the molding cavity upon hardening in order to assure that the plastic material completely fills the cavity. Otherwise the molded product may be crimped.

In a prior art stacked multi-parting molding system, the injection system is used to apply hold pressure in the molding cavities. However, the use of the injection system to apply hold pressure may increase the cycle time because less time will be available during the molding cycle for plasticization of the molding material prior to injection. Also, with typical desynchronized stacked molding systems, when at least one of the molding cavities is opened, the injection system is separated from the remainder of the feed system that carries the plastic material to the molding cavities, thereby reducing the time available for the injection system to apply hold pressure.

While hold pressure is being applied to the molding cavities, the molding cavities must be tightly clamped. While both molding cavities are closed, the means that position the molding blocks apply an axial clamping force to the molding cavities along their common axis to thereby tightly clamp the molding cavities. However, whenever one molding cavity is opened, this axial clamping force is no longer applied by the positioning means. Although Elly et al describe the use of wedge-shaped locking means for maintaining one molding cavity in a closed position while the other molding cavity is in an open position, the dial clamping force that is applied by the wedge-shaped locking means to the molding cavity that remains closed is significantly less than that applied by the positioning means when both molding cavities are closed, and typically is insufficient to enable adequate hold pressure to be applied to the closed molding cavity.

US-A-3417433, upon which the preambles of claims 1 and 17 are based, discloses an injection molding machine comprising a plurality of plattens which may be moved together by a ram to define a molding cavity on each side of a wedging member which may be selectively aligned with an infeed gate of a respective one of two injection nozzles. An injection piston is provided, reciprocable under fluid pressure to force material to be molded into the mold cavity.

According to the present invent ion there is provided a method of controlling hold pressure applied to molding cavities of a stacked multi-parting injection molding system having desynchronized injection periods, including left, center and right molding blocks disposed for movement with respect to each other along a common axis and defining a left molding cavity between the center and left molding blocks and a right molding cavity between the center and right molding blocks, when cyclic injection molding a plastic material by utilizing a combination of the center block and an injection system which together encompass an adjustable feed system that is separated during the molding cycle by the injection system being separated from the center block, the feed system having within the center block a left branch for feeding the left molding cavity and a right branch for feeding the right molding cavity, the method comprising the steps of:
(a) adjusting the feed system to enable plastic material to be fed from the injection system through the left branch to the left molding cavity;
(b) pressurizing the injection system to inject the plastic material through the left branch to fill the left molding cavity;
(c) adjusting the feed system to enable plastic material to be fed from the injection system through the right branch to the right molding cavity;
(d) pressurizing the injection system to inject the plastic material through the right branch to fill the right molding cavity; and,
(e) separating the injection system from the center block at a time when the injection system is not being pressurized in accordance with step (b) or step (d);
   the method being characterized by the feed system having within the center block, means for confining injected plastics material in the respective branches and molding cavities, and the method further comprising the steps of:
(f) confining the plastic material injected into the left branch and the left molding cavity with said confining means,
(g) hold pressurizing the plastic material confined in the left branch and the left molding cavity;
(h) confining the plastic material injected into the right branch and the right molding cavity with said confining means; and,
(i) hold pressurizing the plastic material confined in the right branch and the right molding cavity.
   The two molding sequences for the left and right molding cavities may be overlapping.
   The molding system of the present invention may further include movable packing means in the center block for hold pressurizing the plastic material confined in the respective branches and molding cavities,
   wherein step (g) further comprises the step of:
(j) moving the packing means to further hold pressurize the plastic material confined in the left branch and the left molding cavity; and,
   wherein step (i) further comprises the step of:
(k) moving the packing means to further hold pressurize the plastic material confined in the right branch and the right molding cavity.

When the molding cavities have desynchronous opening periods, the molding system includes first means for moving the left, center and right molding blocks along the common axis with respect to each other for desynchronously opening the closing the left and right molding cavities by retracting the first means, and for simultaneously clamping both molding cavities in a closed position by protracting the first means; and second means for locking one molding cavity in a closed position while both molding cavities are clamped in a closed position and for maintaining the one molding cavity in a closed position while the other molding cavity is in an open position, the method comprising the further step of:
(v) locking one molding cavity in a closed position while both molding cavities are clamped in a closed position by the first means;
(w) maintaining the one molding cavity in a locked-closed position after the other molding cavity is opened; and,
(x) while the first means is retracted to open the other molding cavity, expanding the thickness of at least one of the molding blocks that defines the one molding cavity in order to provide axial clamping force to the one molding cavity that is maintained in a closed position by the second means after the other molding cavity is opened.

According to another aspect of the invention there is provided a system for controlling hold pressure applied to molding cavities of a stacked multi-parting injection molding system having desynchronized injection periods, including left, center and right molding blocks disposed for movement with respect to each other along a common axis and defining a left molding cavity between the center and left molding blocks and a right molding cavity between the center and right molding blocks, when cyclic injection molding a plastic material by utilizing a combination of the center block and an injection system which together encompass an adjustable feed system that is separated during the molding cycle by the injection system being separated from the center block, the feed system having within the center block a left branch for feeding the left molding cavity, and a right branch for feeding the right molding cavity, the system comprising:
(a) means for adjusting the feed system to enable plastic material to be fed from the injection system through the left branch to the left molding cavity;
(b) means for pressurizing the injection system to inject the plastic material through the left branch to fill the left molding cavity;
(c) means for adjusting the feed system to enable plastic material to be fed from the injection system through the right branch to the right molding cavity;
(d) means for pressurizing the injection system to inject the plastic material through the right branch to fill the right molding cavity; and,
(e) means for separating the injection system from the center block at a time when the injection system is not being pressurized, the system being characterized by the feed system further including:
(f) means for confining the plastic material injected into the left branch and the left molding cavity;
(g) means for hold pressurizing the plastic material confined in the left branch and the left molding cavity;
(h) means for confining the plastic material injected into the right branch and the right molding cavity; and,
(i) means for hold pressurizing the plastic material confined in the right branch and the right molding cavity.

Additional features of the invention are described with reference to the description of the preferred embodiments.

### BRIEF DESCRIPTION OF THE DRAWING

Figure 1 illustrates one preferred embodiment of the hold pressure control system of the present invention in a stacked multi-parting injection molding system.

Figure 2 illustrates an alternative preferred embodiment of the hold pressure control system of the present invention in a stacked multi-parting injection molding system.

Figures 3A and 3B illustrate another alternative embodiment of the hold pressure control system of the present invention in a stacked multi-parting injection molding system, with Figure 3A showing both molding cavities closed, and Figure 3B showing one molding cavity open.

Figure 4 illustrates still another alternative embodiment of the hold pressure control system of the present invention in a stacked multi-parting injection molding system.

Figure 5 illustrates a further alternative embodiment of the hold pressure control system of the present invention in a stacked multi-parting injection molding system.

Figure 5A illustrates a modified injection system for the hold pressure control system illustrated in Figure 5.

Figure 6 is a side view illustrating a preferred embodiment of the axial clamping system of the present invention in a stacked multi-parting molding system with both molding cavities in closed positions.

Figure 7 is a side view illustrating the molding system of Figure 6, with one molding cavity in an open position and the other molding cavity locked in a closed position.

Figure 8 is a sectional view of a portion of a locking mechanism included in the system of Figures 6 and 7, taken along line 8-8 of Figure 6.

Figure 9 is a sectional view of a portion of a locking mechanism included in the system of Figures 6 and 7, taken along line 9-9 of Figure 7.

### DESCRIPTION OF THE PREFERRED EMBODIMENT

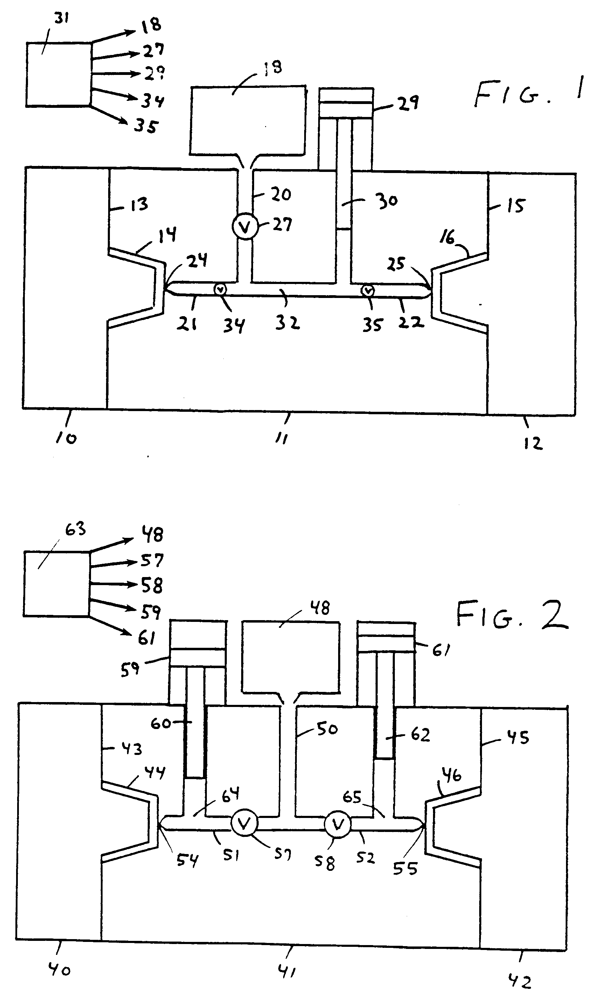

Referring to Figure 1, a preferred embodiment of a stacked multi-parting injection molding system in which hold pressure is controlled according to the present invention includes a left molding block 10, a center molding block 11 and a right molding block 12. The center molding block 11 and the left molding block 10 join at a first parting surface 13 and define a left molding cavity 14. The center molding block 11 and the right molding block 12 join at a second parting surface 15 and define a right molding cavity 16. The center molding block 11 may include a center platen of a molding machine. An injection system 18 and the center molding block 11 define an adjustable feed system, which may have a molten core. Within the center molding block 11, the feed system includes a runner stem 20, which is connected to a left branch 21 and a right branch 22. The left branch 21 terminates in a gate 24 to the left molding cavity 14; and the right branch 22 terminates in a gate 25 to the right molding cavity 16. A first valve 27 in the runner stem 20 controls the flow of plastic material through the runner stem 20. The injection system 18 is disposed to inject plastic material into the runner stem 20. The injection system 18 may be separated from the remainder of the feed system when not being pressurized to inject the plastic material into the runner stem 20. The molding system has desynchronized injection periods. A piston system 29 including a packing element 30 is connected to the feed system for controlling the hold pressure in the left and right branches 21, 22. A controller 31 controls hold pressure in the molding system of Figure 1 by controlling the operations of the injection system 18, the valve 27 and the piston system 29.

The method of controlling hold pressure by utilizing the embodiment of the invention illustrated in Figure 1 includes the following steps:
(a) adjusting the feed system by opening the first valve 27 to enable plastic material 32 to be fed from the injection system 18 through the left branch 21 to the left molding cavity 14;
(b) pressurizing the injection system 18 to inject the plastic material 32 through the left branch 21 to fill the left molding cavity 14;
(c) shutting the first valve 27 to confine the plastic material 32 injected into the left branch 21 and the left molding cavity 14;
(d) hold pressurizing the plastic material 32 confined in the left branch 21 and the left molding cavity 14 by the first valve 27;
(e) adjusting the feed system by opening the first valve 27 to enable plastic material 32 to be fed from the injection system 18 through the right branch 22 to the right molding cavity 16;
(f) pressurizing the injection system 18 to inject the plastic material 32 through the right branch 22 to fill the right molding cavity 16;
(g) shutting the first valve 27 to confine the plastic material 32 injected into the right branch 22 and the right molding cavity 16; and
(h) hold pressurizing the plastic material 32 confined in the right branch 22 and the right molding cavity 16 by the first valve 27. Steps (a) through (d) are performed in sequence; and steps (e) through (h) are performed in sequence. These two sequences (a)-(d) and (e)-(h) may be overlapping. Ejection of the product molded in the right molding cavity 16 may conveniently take place in the period after step (b) and before step (f); and ejection of the product molded in the left molding cavity 14 may conveniently take place in the period after step (f) and before step (b). Alternatively, ejection of both molded products may take place during the period after step (f) and before step (b).

Plasticization may commence immediately after step (b) and immediately after step (f) in order decrease the cycle time.

The system of Figure 1 may further include two optional left and right valves 34 and 35. The operations of the valves 34 and 35 are controlled by the controller 31. The feed system may be further adjusted during step (a) by opening the left valve 34 and closing the right valve 35 to thereby enable the plastic material to flow into only the left molding cavity 14 during step (b). During step (e) the left valve 34 is closed and the right valve 35 is opened to thereby enable the plastic material to flow into only the right molding cavity during step (f). The optional valves 34 and 35 are not required in this embodiment when both steps (b) and (f) take place with both molding cavities 14, 16 closed, and the plastic material previously injected into one molding cavity provides resistance to further flow into such molding cavity and its adjacent branch while the plastic material is being injected into the other molding cavity. During initialization of the system, a previously molded product is placed in the one molding cavity to provide such resistance. The inclusion of the optional left and right valves 34, 35 allows hold pressure to be applied for a longer period because hold pressure can be continued to be applied to one molding cavity when the other molding cavity is opened.

Step (d) may further include the step of (i) further hold pressurizing the plastic material confined in the left molding cavity 14 by operating the piston system 29 to protract the packing element 30; and step (h) may further include the step of (j) further hold pressurizing the plastic material confined in the right molding cavity 16 by operating the piston system 29 to protract the packing element 30.

This method further includes the step of (k) depressurizing the feed system between the first valve 27 and the molding cavities 14, 16 by operating the piston system 27 to retract the packing element 30.

Referring to Figure 2, an alternative preferred embodiment of a stacked multi-parting molding system in which hold pressure is controlled according to the present invention includes a left molding block 40, a center molding block 41 and a right molding block 42. The center molding block 41 and the left molding block 40 join at a first parting surface 43 and define a left molding cavity 44. The center molding block 41 and the right molding block 42 join at a second parting surface 45 and define a right molding cavity 46. The center molding block 41 may include a center platen of a molding machine. An injection system 48 and the center molding block 41 define an adjustable feed system, which may have a molten core. Within the center molding block 41, the feed system includes a runner stem 50, which is connected to a left branch 51 and a right branch 52. The left branch 51 terminates in a gate 54 to the left molding cavity 44; and the right branch 52 terminates in a gate 55 to the right molding cavity 46. A first valve 57 in the left branch 51 controls the flow of plastic material through the left branch 51. A second valve 58 in the right branch 52 controls the flow of plastic material through the right branch 52. The injection system 48 is disposed to inject plastic material into the runner stem 50. The injection system 48 may be separated from the remainder of the feed system when not being pressurized to inject the plastic material into the runner stem 50. The molding system has desynchronized injection periods. A left piston system 59 including a left packing element 60 is connected to the left branch 51 for controlling the hold pressure in the left branch 51 and the left molding cavity 44. A right piston system 61 including a right packing element 62 is connected to the right branch 52 for controlling the hold pressure in the right branch and the right molding cavity 46. A controller 63 controls hold pressure in the molding system of Figure 2 by controlling the operations of the injection system 48, the valves 57, 58 and the piston system 59, 61.

The method of controlling hold pressure by utilizing the embodiment of the invention illustrated in Figure 2 includes the following steps:
(a) adjusting the feed system by opening the first valve 57 to enable plastic material 64 to be fed from the injection system 48 through the runner stem 50 and the left branch 51 to the left molding cavity 44;
(b) pressurizing the injection system 48 to inject the plastic material 64 through the left branch 51 to fill the left molding cavity 44;
(c) shutting the first valve 57 to confine the plastic material 64 injected into the left branch 51 and the left molding cavity 44;
(d) hold pressurizing the plastic material 64 confined in the left branch 51 and the left molding cavity 44 by the first valve 57;
(e) adjusting the feed system by opening the second valve 58 to enable plastic material 65 to be fed from the injection system 18 through the runner stem 50 and the right branch 52 to the right molding cavity 46;
(f) pressurizing the injection system 48 to inject the plastic material 65 through the right branch 52 to fill the right molding cavity 46;
(g) shutting the second valve 58 to confine the plastic material 65 injected into the right branch 52 and the right molding cavity 46; and
(h) hold pressurizing the plastic material 65 confined in the right branch 52 and the right molding cavity 46 by the first valve 57. Steps (a) through (d) are performed in sequence; and steps (e) through (f) are performed in sequences. These two sequences (a)-(d) and (e)-(h) may be overlapping.

Step (d) may further include the step of (i) further hold pressurizing the plastic material 64 confined in the left molding cavity 44 by operating the left piston system 59 to protract the left packing element 60; and step (h) may further include the step of (j) further hold pressurizing the plastic material 65 confined in the right molding cavity 46 by operating the right piston system 61 to protract the right packing element 62.

This method further includes the steps of (k) depressurizing the left branch 51 between the first valve 57 and the left molding cavity 44 by operating the left piston system 59 to retract the left packing element 60; and (l) depressurizing the right branch between the second valve 58 and the right molding cavity 46 by operating the right piston system 61 to retract the right packing element 62.

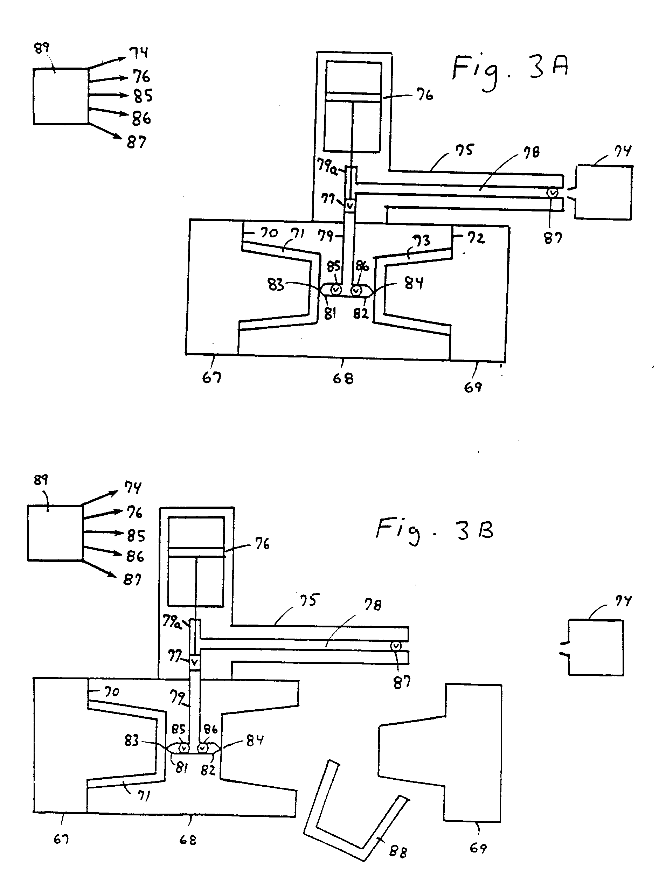

Referring to Figures 3A and 3B, another alternative preferred embodiment of a stacked multi-parting injection molding system in which hold pressure is controlled according to the present invention includes a left molding block 67, a center molding block 68 and a right molding block 69. The center molding block 68 and the left molding block 67 join at a first parting surface 70 and define a left molding cavity 71. The center molding block 68 and the right molding block 69 join at a second parting surface 72 and define a right molding cavity 73. The center molding block 68 may include a center platen of a molding machine. An injection system 74 and the center molding block 68 define an adjustable feed system, which may have a molten core. The center molding block 68 includes a snorkle unit 75 and a piston system 76. The piston system 76 includes a packing element 77. The packing element 77 includes a one-way valve that permits plastic material to flow only toward the molding cavities 71, 73. Within the center molding block 68, the feed system includes a horizontal runner stem 78 and a vertical runner stem 79 connected together at an angle. The vertical runner stem 79 extends in both directions from its juncture with the horizontal runner stem 78, and includes a recess 79a. The vertical runner stem 79 is connected to a left branch 81 and a right branch 82. The packing element 77 of the piston system is positioned within the vertical runner stem 79. When the piston system 76 is retracted, the packing element 77 is withdrawn into the recess 79a. When the piston system 76 is protracted the packing element 77 is protracted to a position within the vertical runner stem 79 between the horizontal runner stem 78 and the left and right branches 81, 82. Within the center molding block 68, the left branch 81 terminates in a gate 83 to the left molding cavity 71; and the right branch 82 terminates in a gate 84 to the right molding cavity 73. An optional first valve 85 in the left branch 81 controls the flow of plastic material through the left branch 81. An optional second valve 86 in the right branch 82 controls the flow of plastic material through the right branch 82. The injection system 74 is disposed to inject plastic material into the inlet stem 78 of the snorkle unit 75. An optional third valve 87 is disposed in the inlet stem 78 to prevent plastic material from leaking out of the horizontal runner stem 78. As shown in Figure 3B, the injection system 74 may be separated from the remainder of the feed system when the right molding cavity 73 is opened to enable a product 88 to be ejected therefrom. The molding system of Figures 3A and 3B has desynchronized injection periods. A controller 89 controls the hold pressure control system of Figures 3A and 3B by controlling the operation of the injection system 74, the piston system 76, and the valves 85, 86, 87. In an alternative embodiment (not shown), the packing element 77 is a cylindrical piston instead of a one-way valve.

The method of controlling hold pressure by utilizing the embodiment of the invention illustrated in Figures 3A and 3B includes the following steps:
(a) adjusting the feed system by retracting the packing element 77 into the recess 79a and opening the first valve 85 and the third valve 87 to enable plastic material to be fed from the injection system 74 through the horizontal runner stem 78, the vertical runner stem 79 and the left branch 81 to the left molding cavity 71;
(b) pressurizing the injection system 74 to inject the plastic material through the horizontal runner stem 78, the vertical runner stem 79 and the left branch 81 to fill the left molding cavity 71;
(c) protracting the packing element 77 into that portion of the vertical runner stem 79 between the horizontal runner stem 78 and the left branch 81 to confine the plastic material injected into the left branch 81 and the left molding cavity 71;
(d) maintaining the packing element 77 in its protracted position and/or further protracting the packing element 77 to hold pressurize the plastic material confined in the left branch 81 and the left molding cavity 71 by the packing element 77;
(e) adjusting the feed system by retracting the packing element 77 into the recess 79a and opening the second valve 86 and the third valve 87 to enable plastic material to be fed from the injection system 74 through the horizontal runner stem 78, the vertical runner stem 79 and the right branch 82 to the right molding cavity 73;
(f) pressurizing the injection system 74 to inject the plastic material through the horizontal runner stem 78, the vertical runner stem 79 and the right branch 82 to fill the right molding cavity 73;
(g) protracting the packing element 77 into that portion of the vertical runner stem 79 between the horizontal runner stem 78 and the right branch 82 to confine the plastic material injected into the right branch 82 and the right molding cavity 73; and
(h) maintaining the packing element 77 in its protracted position and/or further protracting the packing element 77 to hold pressurize the plastic material confined in the right branch 82 and the right molding cavity 73 by the packing element 77.

Steps (c) and (d) may be performed while the right molding cavity 73 is opened as shown in Figure 3B. Likewise, steps (g) and (h) may be performed while the left molding cavity 71 is opened.

The first valve 85 may be closed during steps (e) and (f); and the second valve 86 may be closed during steps (a) and (b).

Steps (a) through (d) are performed in sequence; and steps (e) through (h) are performed in sequence. These two sequences may be overlapping.

This method further includes the steps of (i) depressurizing the left branch 81 between the packing element 77 and the left molding cavity 71 by operating the piston system 76 to retract the packing element 77; and (j) depressurizing the right branch 82 between the packing element 77 and the right molding cavity 73 by operating the piston system 76 to retract the packing element 77.

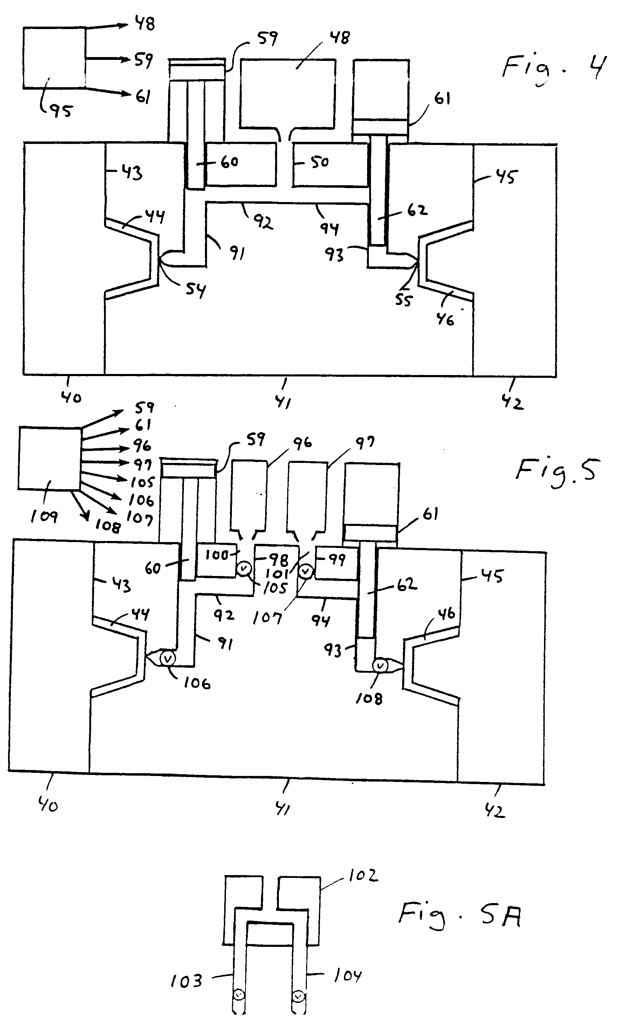

Referring to Figure 4, still another alternative preferred embodiment of the hold pressure control system of the present invention is a variation of the system described above with reference to Figure 2. Common reference numerals are used to describe the common elements of these two systems. This embodiment is a stacked multi-parting molding system including a left molding block 40, a center molding block 41 and a right molding block 42. The center molding block 41 and the left molding block 40 join at a first parting surface 43 and define a left molding cavity 44. The center molding block 41 and the right molding block 42 join at a second parting surface 45 and define a right molding cavity 46. The center molding block 41 may be either a center platen of a molding machine. An injection system 48 and the center molding block 41 define an adjustable feed system, which may have a molten core. Within the center molding block 41, the feed system includes a runner stem 50, which is connected to a left branch and a right branch. The left branch includes a vertical portion 91 and a horizontal portion 92. The vertical portion 91 of the left branch extends in both directions from its juncture with the horizontal portion 92 of the left branch. The right branch includes a vertical portion 93 and a horizontal portion 94. The vertical portion 93 of the right branch extends in both directions from its juncture with the horizontal portion 94 of the right branch.

A left piston system 59 including a left packing element 60 is connected to the vertical portion 91 of the left branch for controlling the hold pressure in the left branch and the left molding cavity 44. A right piston system 61 including a right packing element 62 is connected to the vertical portion 93 of the right branch for controlling the hold pressure in the right branch and the right molding cavity 46. The packing elements 60, 62 are cylindrical pistons and do not include any valves. The packing element 60 of the piston system 59 is positioned for movement within the vertical portion 91 of the left branch. When the piston system 59 is retracted the packing element 60 is withdrawn to open the juncture between the vertical 91 and horizontal 92 portions of left branch. When the piston system 59 is protracted the packing element 60 blocks the flow of plastic material through the vertical portion 91 of the left branch from the horizontal portion 92 of the left branch. The packing element 62 of the piston system 61 is positioned for movement within the vertical portion 93 of the right branch. When the piston system 61 is retracted the packing element 62 is withdrawn to open the juncture between the vertical 93 and horizontal 94 portions of the right branch. When the piston system 61 is protracted the packing element 62 blocks the flow of plastic material through the vertical portion 93 of the right branch from the horizontal portion 94 of the right branch. The left branch terminates in a gate 54 to the left molding cavity 44; and the right branch terminates in a gate 55 to the right molding cavity 46. The injection system 48 is disposed to inject plastic material into the runner stem 50. The injection system 48 may be separated from the remainder of the feed system when not being pressurized to inject the plastic material into the runner stem 50. The molding system has desynchronized injection periods. A controller 95 controls the hold pressure control system of Figure 4 by controlling the operation of the injection system 48, the left piston system 59 and the right piston system 61. The hold pressure control system of Figure 4 does not require valves in the feed system.

The method of controlling hold pressure by utilizing the embodiment of the invention illustrated in Figure 4 includes the following steps:
(a) adjusting the feed system by retracting the left packing element 60 to enable plastic material to be fed from the injection system 48 through the runner stem 50, and the horizontal 92 and vertical 91 portions of the left branch to the left molding cavity 44;
(b) pressurizing the injection system 48 to inject the plastic material through the runner stem 50, and the horizontal 92 and vertical 91 portions of the left branch to fill the left molding cavity 44;
(c) protracting the left packing element 60 into the vertical portion 91 of the left branch between the horizontal portion 92 of the left branch and the left molding cavity 44 to confine the plastic material injected into the vertical portion of the left branch and the left molding cavity 44;
(d) maintaining the left packing element 60 in its protracted position and/or further protracting the left packing element 60 to hold pressurize the plastic material confined in the vertical portion 91 of left branch and the left molding cavity 44 by the packing element 60;
(e) adjusting the feed system by retracting the right packing element 62 to enable plastic material to be fed from the injection system 48 through the runner stem 50, and the horizontal 94 and vertical 93 portions of the right branch to the right molding cavity 46;
(f) pressurizing the injection system 48 to inject the plastic material through the runner stem 50, and the horizontal 94 and vertical 93 portions of the right branch to fill the right molding cavity 46;
(g) protracting the right packing element 62 into the vertical portion 93 of the right branch between the horizontal portion 94 of the right branch and the right molding cavity 46 to confine the plastic material injected into the right branch and the right molding cavity 46; and
(h) maintaining the right packing element 62 in its protracted position and/or further protracting the right packing element 62 to hold pressurize the plastic material confined in the right branch and the right molding cavity 44 of the right packing element 62.

This method further includes the steps of (i) depressurizing the vertical portion 91 of left branch between the left packing element 60 and the left molding cavity 44 by operating the left piston system 59 to retract the left packing element 60; and (l) depressurizing the vertical portion 93 of right branch between the right packing element 62 and the right molding cavity 46 by operating the right piston system 61 to retract the right packing element 62.

Steps (a) through (d) are performed in sequence; and steps (e) through (h) are performed in sequence. These two sequences may be overlapping.

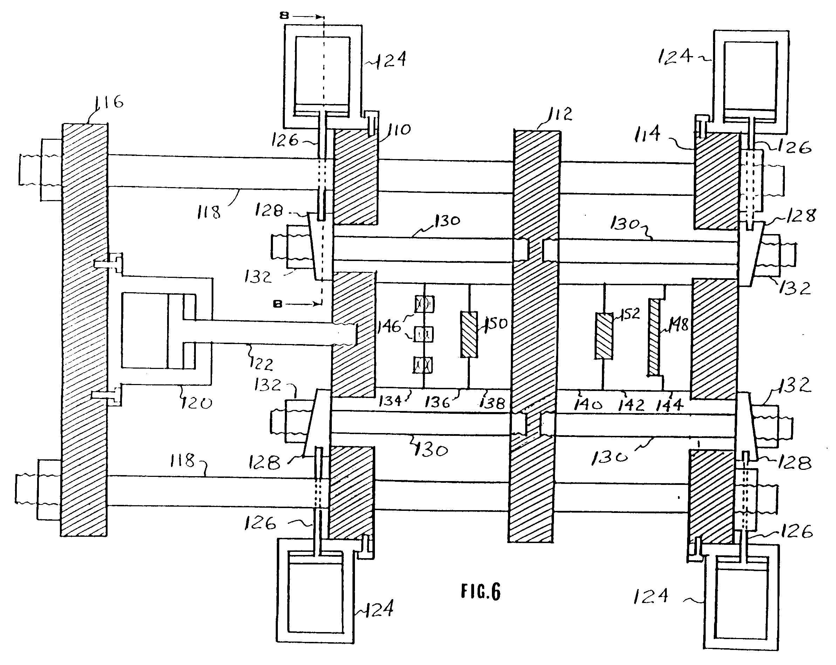

Referring to Figure 5, a further alternative preferred embodiment of the hold pressure control system of the present invention is a variation of the system described above with reference to Figure 4. Common reference numerals are used to describe the common elements of these two systems. This embodiment is a stacked multi-parting molding system including a left molding block 40, a center molding block 41 and a right molding block 42. The center molding block 41 and the left molding block 40 join at a first parting surface 43 and define a left molding cavity 44. The center molding block 41 and the right molding block 42 join at a second parting surface. 45 and define a right molding cavity 46. The center molding block 41 may be either a center platen of a molding machine. An injection system including a left injection unit 96 and a right injection unit 97 and the center molding block 41 define an adjustable feed system, which may have a molten core. Within the center molding block 41, the feed system includes a left runner stem 98, which is connected to a left branch, and a right runner stem 99, which is connected to a right branch. The left branch includes a vertical portion 91 and a horizontal portion 92. The vertical portion 91 of the left branch extends in both directions from its juncture with the horizontal portion 92 of the left branch. The right branch includes a vertical portion 93 and a horizontal portion 94. The vertical portion 93 of the right branch extends in both directions from its juncture with the horizontal portion 94 of the right branch.

The left runner stem 98 includes an orifice 100 for receiving plastic material from the left injection unit 96; and the right runner stem 99 includes an orifice 101 for receiving plastic material from the right injection unit 97. Alternatively, the system includes only a single injection unit 96, which is moved back and forth between the left and right injection orifices 100, 101 for injecting plastic material into the respective left and right runner stems 98, 99. In another alternative embodiment, as shown in Figure 5A, the injection system includes a single injection unit 102 having two injection nozzles 103, 104 for injecting plastic material into the respective left and right injection orifices 100, 101. A first valve 105 is located in the left runner stem 98 and a second valve 106 is located in the left branch 91. A third valve 107 is located in the right runner stem 99 and fourth valve 108 is located in the right branch 93.

A left piston system 59 including a left packing element 60 is connected to the vertical portion 91 of the left branch for controlling the hold pressure in the left branch and the left molding cavity 44. A right piston system 61 including a right packing element 62 is connected to the vertical portion 93 of the right branch for controlling the hold pressure in the right branch and the right molding cavity 46. The packing elements 60, 62 are cylindrical pistons and do not include any valves. The packing element 60 of the piston system 59 is positioned for movement within the vertical portion 91 of the left branch. When the piston system 59 is retracted the packing element 60 is withdrawn to open the juncture between the vertical 91 and horizontal 92 portions of left branch. When the piston system 59 is protracted the packing element 60 blocks the flow of plastic material through the vertical portion 91 of the left branch from the horizontal portion 92 of the left branch. The packing element 62 of the piston system 61 is positioned for movement within the vertical portion 93 of the right branch. When the piston system 61 is retracted the packing element 62 is withdrawn to open the juncture between the vertical 93 and horizontal 94 portions of the right branch. When the piston system 61 is protracted the packing element 62 blocks the flow of plastic material through the vertical portion 93 of the right branch from the horizontal portion 94 of the right branch. The left branch terminates in a gate 54 to the left molding cavity 44; and the right branch terminates in a gate 55 to the right molding cavity 46. The molding system has desynchronized injection periods. A controller 109 controls the hold pressure control system of Figure 5 by controlling the operation of the left and right injection units 96, 97, the left piston system 59, the right piston system 61, and the valves 105, 106, 107 and 108.

The method of controlling hold pressure by utilizing the embodiment of the invention illustrated in Figure 5 includes the following steps:
(a) adjusting the feed system by retracting the left packing element 60 and opening the valves 105 and 106 to enable plastic material to be fed from the left injection unit 96 through the left runner stem 98, and the horizontal 92 and vertical 91 portions of the left branch to the left molding cavity 44;
(b) pressurizing the left injection unit 96 to inject the plastic material through the left runner stem 98, and the horizontal 92 and vertical 91 portions of the left branch to fill the left molding cavity 44;
(c) protracting the left packing element 60 into the vertical portion 91 of the left branch between the horizontal portion 92 of the left branch and the left molding cavity 44 to confine the plastic material injected into the vertical portion 91 of the left branch and the left molding cavity 44;
(d) maintaining the left packing element 60 in its protracted position and/or further protracting the left packing element 60 to hold pressurize the plastic material confined in the vertical portion 91 of the left branch and the left molding cavity 44 by the packing element 60;
(e) adjusting the feed system by retracting the right packing element 62 and opening the valves 107 and 108 to enable plastic material to be fed from the right injection unit 97 through the right runner stem 99, and the horizontal 94 and vertical 93 portions of the right branch to the right molding cavity 46;
(f) pressurizing the right injection unit 97 to inject the plastic material through the right runner stem 99, and the horizontal 94 and vertical 93 portions of the right branch to fill the right molding cavity 46;
(g) protracting the right packing element 62 into the vertical portion 93 of the right branch between the horizontal portion 94 of the right branch and the right molding cavity 46 to confine the plastic material injected into the right branch and the right molding cavity 46; and
(h) maintaining the right packing element 62 in its protracted position and/or further protracting the right packing element 62 to hold pressurize the plastic material confined in the right branch and the right molding cavity 44 of the right packing element 62.

This method further includes the steps of (i) depressurizing the vertical portion 91 of left branch between the left packing element 60 and the left molding cavity 44 by operating the left piston system 59 to retract the left packing element 60; and (l) depressurizing the vertical portion 93 of right branch between the right packing element 62 and the right molding cavity 46 by operating the right piston system 61 to retract the right packing element 62.

The first and second valves 105, 106 may be closed during steps (e) and (f); and the third and fourth valves 107, 108 may be closed during steps (a) and (b). The valves 105, 106, 107 and 108 are optional since the left and right branches may be depressurized to prevent leakage as described above.

Steps (a) through (d) are performed in sequence; and steps (e) through (h) are performed in sequence. These two sequences may be overlapping.

It is usually desirable to provide a high injection pressure at the gate to a molding cavity immediately as the injection is started. But due to the feed system of a multi-parting injection molding system tending to be rather long in distance, and hot molten plastic material being quite compressible such high injection pressure at the gate is difficult to obtain. It should be noted that the piston systems of the system and method of the present invention may be used to increase initial pressure at the gate at the beginning of injection.

The piston systems in the embodiments described above may be hydraulic, as shown, or may be electrically or spring powered. The valves in the embodiments described above may be rotary or multidependent. Alternatively the valve function may be provided ultrasonicly or by heat impulse to the plastic material at the gate. Also the different types of confining systems described herein may be used interchangeably.

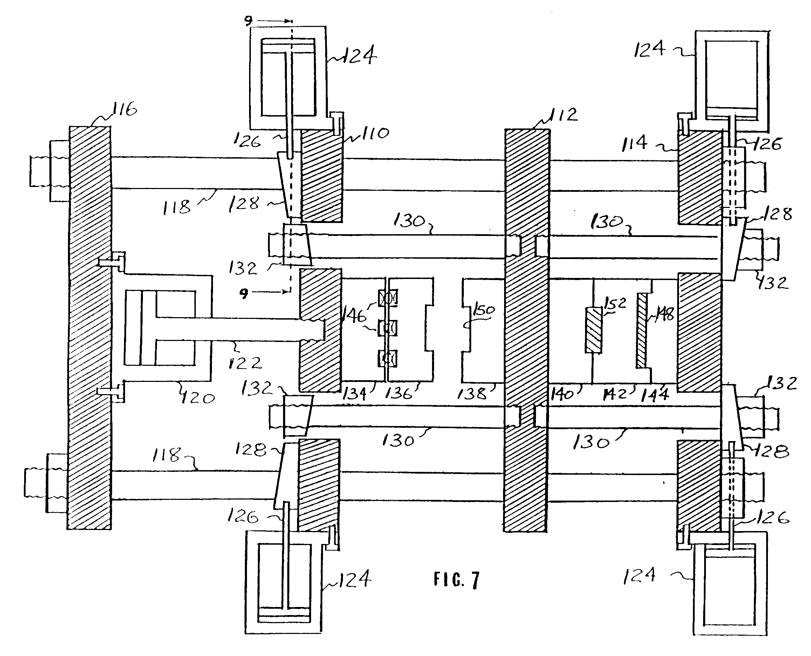

Referring to Figures 6 and 7, a preferred embodiment of the multi-parting molding system of the present invention includes a left platen 110, a center platen 112, a right platen 114, a base block 116, positioning bars 118, and a hydraulic positioning mechanism containing a cylinder 120, a rod 122, a plurality of locking mechanisms, each including a hydraulic cylinder 124, a rod 126, a wedge-shaped locking plate 128, a locking bar 130 and a wedge-shaped nut 132; mold parts 134, 136, 138, 140, 142 and 144; a plurality of springs 46 and a hydraulic cylinder 148. The combination of the center platen 112 and the mold parts 138, 140 form a center molding block in a stacked molding system and may be adapted to include the different embodiments of the hold pressure control system of the present invention described herein with reference to Figures 1 through 5 A.

The right platen 114 and the base block 116 are stationary, and are connected by the positioning bars 118. The left and center platens 110, 112 are supported by the bars 118 between the base block 116 and the right platen 114 for lateral movement in directions toward and away from the right platen 114 and the base block 116. The cylinder 120 of the hydraulic positioning mechanism is attached to the base block 116, and the rod 122 of the hydraulic positioning mechanism is attached to the left platen 110.

For each of the plurality of locking mechanisms, the cylinder 124 is attached to the left or right platen 110 or 114, the rod 126 moves in the cylinder 124 and is connected to the locking plate 128; one end of the bar 130 is secured to the center platen 112; and the nut 132 is fastened to the other end of the bar 130. The other end of the bar 130 is threaded so that the position of the nut 132 may be adjusted.

A left molding block includes the left platen 110 and mold parts 134 and 136. A center molding block includes the center platen 112 and mold parts 138 and 140. A right molding block includes the right platen 114 and mold parts 142 and 144. A left molding cavity 150 is defined by the mold parts 136 and 138; and a right molding cavity 152 is defined by the mold parts 140 and 142.

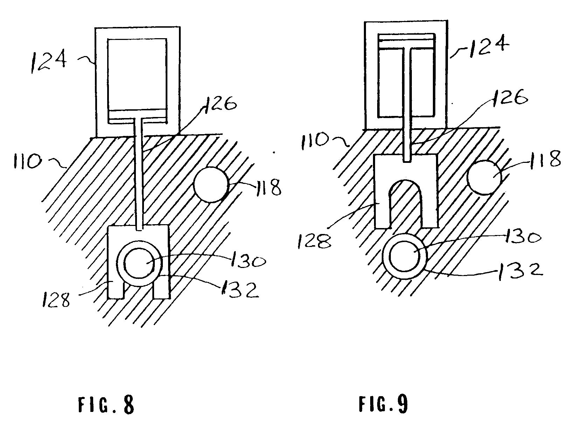

To close both the left molding cavity 150 and the right molding cavity 152, the rod 122 of the hydraulic positioning mechanism is protracted, as shown in Figure 6. The amount of axial clamping force applied to the left and right mold cavities 150, 152 can be controlled by controlling the amount of protraction of the rod 122 of the hydraulic positioning mechanism. To open the molding cavities 150, 152, the hydraulic positioning mechanism is operated to retract the rod 122. When both molding cavities 150, 152 are closed the locking mechanisms are operated to lock both molding cavities 150, 152 the closed position, as shown in Figure 6. To lock a molding cavity (for example, the left molding cavity 150) in a closed position, the rod 126 is protracted to wedge the locking plate 128 between the nut 132 and the left platen 110, as shown in Figures 7 and 9. To open the left molding cavity 150, the rod 126 is retracted to remove the locking plate 128 from between the nut 132 and the left platen 110, as shown in Figures 7 and 9.

When one of the two molding cavities 150, 152 is opened at a time when it is desired to maintain the other molding cavity in a closed position, it is necessary to lock the other molding cavity in the closed position. Thus, when the left molding cavity 150 is opened, as shown in Figure 7, the locking mechanisms attached to the left platen 110 are operated to unlock the left platen 110 from the bars 130. The locking mechanisms attached to the right platen 114 remain in their locked position. The hydraulic positioning mechanism is then operated to retract the rod 122 and thereby move the left platen 110 to the left, which results in the opening of the left molding cavity 150. Since the locking mechanisms attached to the right platen 114 remain in their locked position, the center platen 112 remains attached to the right platen 114 and resists movement when the rod 122 is retracted to move the left platen 110 and open the left molding cavity 150. Thus the right molding cavity 152 remains closed when the left molding cavity 150 is opened. It will be readily apparent that by a reverse operation of the locking mechanisms, the left molding cavity 150 can be maintained in a locked position while the right molding cavity 152 is opened.

When the axial clamping force applied by the positioning mechanism 118, 120, 122 is removed from the right molding cavity 152 as a result of the retraction of the rod 122, with the right molding cavity being maintained in a closed position, as shown in Figure 7, axial clamping force in addition to that provided by the locking plates 128 is applied to the right molding cavity 152 by expanding the right molding block in response to hydraulic pressure applied within the hydraulic cylinder 148 within the right molding block. The amount of the clamping force applied within the right molding block can be actively controlled by controlling the hydraulic pressure within the hydraulic cylinder 148.

When the clamping force applied by the positioning mechanism 118, 120, 122 is removed from the left molding cavity 150 as a result of the retraction of the rod 122, with the left molding cavity being maintained in a closed position (not shown), axial clamping force in addition to those provided by the locking plates 128 is applied to the left molding cavity 150 by expanding the left molding block in response to spring pressure passively applied by the springs 146 within the left molding block. The springs 146 preferably are parabolic steel washers, which are sometimes referred to as Belleville washers. The springs 146 are compressed by the clamping force applied by the positioning mechanism when the rod 22 is protracted, and expand within the left molding block when the rod 122 is retracted.

In other preferred embodiments, both the left molding block and the right molding block may contain the same type of expanding means, whether passive expanding means, such as the springs 146, or controllable expanding means, such as the hydraulic cylinder 148.

Other variations may be made in the preferred embodiment shown herein without departing from the present invention. For example, the locking plates 128 and the nuts 132 need not be wedge shaped; the clamping means, such as the springs 146 and/or the hydraulic cylinder 148, may be located apart from rather than within the molding blocks; and each of the left and right molding blocks may be of integral construction without necessarily including platens; and the positioning mechanism may be a tuggle system rather than the hydraulic mechanism 120, 122.

In an embodiment (not shown) utilizing a tuggle system for the positioning mechanism and controllable expanding means, such as the hydraulic cylinder 148, the total axial clamping force provided by the tuggle system and the hydraulic cylinder 148 is controlled by controlling the amount of hydraulic pressure applied within the hydraulic cylinder 148.

The hold pressure control systems and clamping systems of the present invention are particularly compatible with the various desynchronized molding cycles described in the aforementioned U.S. Patents Nos. 4,400,431, 4,464,327 and 4,539,171.

## Claims

1. A method of controlling hold pressure applied to molding cavities (14,16;44,46;71,73;150,152) of a stacked multi-parting injection molding system having desynchronized injection periods, including left, center and right molding blocks (10,11,12;40,41,42;67,68,69;110,112,114) disposed for movement with respect to each other along a common axis and defining a left molding cavity (14;44;71;150) between the center and left molding blocks (11,10;41,40;68,67;112,110) and a right molding cavity (16;46;73;152) between the center and right molding blocks (11,12;41,42;68,69;112,114), when cyclic injection molding a plastic material by utilizing a combination of the center block (11;41;68;112) and an injection system (18;48;74) which together encompass an adjustable feed system that is separated during the molding cycle by the injection system (18;48;74;96;97) being separated from the center block, the feed system having within the center block a left branch (21;51;81) for feeding the left molding cavity and a right branch (22;52;82) for feeding the right molding cavity, the method comprising the step of:
(a) adjusting the feed system to enable plastic material to be fed from the injection system through the left branch to the left molding cavity;
(b) pressurizing the injection system to inject the plastic material through the left branch to fill the left molding cavity;
(c) adjusting the feed system to enable plastic material to be fed from the injection system through the right branch to the right molding cavity;
(d) pressurizing the injection system to inject the plastic material through the right branch to fill the right molding cavity; and,
(e) separating the injection system from the center block at a time when the injection system is not being pressurized in accordance with step (b) or step (d);
the method being characterized by the feed system having within the center block, means for confining injected plastics material in the respective branches and molding cavities (27,34,35;57,58;85,86;105,106,107,108), and the method further comprising the step of:
(f) confining the plastic material injected into the left branch and the left molding cavity with said confining means,
(g) hold pressurizing the plastic material confined in the left branch and the left molding cavity;
(h) confining the plastic material injected into the right branch and the right molding cavity with said confining means; and,
(i) hold pressurizing the plastic material confined in the right branch and the right molding cavity.

2. A method according to claim 1, wherein the molding system further includes movable packing means (30;60,62;77) in the center block (11;41;68;112) for hold pressurizing the plastic material confined in the respective branches and molding cavities,
wherein step (g) further comprises the step of:
(j) moving the packing means to further hold pressurize the plastic material confined in the left branch (21;51;81) and the left molding cavity (14;44;71;150); and,
wherein step (i) further comprises the step of:
(k) moving the packing means to further hold pressurize the plastic material confined in the right branch (22;52;82) and the right molding cavity (16;46;93;152).

3. A method according to claim 1, wherein the molding system further includes movable packing means (30;60;62;77) in the center block (11;41;68;112) for hold pressurizing the plastic material confined in the left branch (21;51;81) and left molding cavity (14;44;71;150),
wherein step (g) further comprises the step of:
(j) moving the packing means to further hold pressurize the plastic material confined in the left branch and the left molding cavity.

4. A method according to claim 1, wherein the molding system further includes left and right movable packing means (60,62) in the center block (11;41;68;112) respectively coupled to the left and right branches (21,22;51,52;81,82),
wherein step (g) further comprises the step of:
(j) moving the left packing means (60) to further hold pressurize the plastic material confined in the left branch and the left molding cavity; and
wherein step (i) further comprises the step of:
(k) moving the right packing means (62) to further hold pressurize the plastic material confined in the right branch and the right molding cavity.

5. A method according to claim 1, wherein the left and right branches (21,22;51,52;81,82) include left and right injection orifices (100,101) respectively for receiving plastic material from a single injection unit (102), the method further comprising the steps of:
(l) moving the injection unit to the left orifice (100) for injecting plastic material into the left branch; and,
(m) moving the injection unit to the right orifice (101) for injecting plastic material into the right branch.

6. A method according to claim 1, wherein the injection system includes left and right injection nozzles (103,104), and wherein the left and right branches include left and right injection orifices (100,101) respectively for receiving plastic material from the injection system, the method further comprising the steps of:
(l) injecting plastic material into the left branch (21;51;81) from the left nozzle (103); and,
(m) injecting plastic material into the right branch (22;52;82) from the right nozzle (104).

7. A method according to claim 1, wherein the injection system includes a single injection unit having left and right injection nozzles, and wherein the left and right branches include left and right injection orifices respectively for receiving plastic material from the injection system,
wherein step (b) comprises the step of:
(l) injecting plastic material into the left branch from the left nozzle; and,
wherein step (d) comprises the step of:
(m) injecting plastic material into the right branch from the right nozzle.

8. A method according to claim 1, wherein the confining means (77) are movable; and,
wherein step (g) comprises the step of:
(n) moving the confining means to further hold pressurize the plastic material confined in the left branch (21;51;81) and the left molding cavity (14;44;71;150).

9. A method according to claim 8, wherein step (i) comprises the step of:
(o) moving the confining means (77) to further hold pressurize the plastic material confined in the right branch and the right molding cavity.

10. A method according to claim 8, wherein the confining means (77) are movable within the left branch; and,
wherein step (n) comprises moving the confining means within the left branch to further hold pressurize the plastic material confined in the left branch (21;51;81) and the left molding cavity (14;44;71;150).

11. A method according to claim 10, wherein the confining means (77) are also movable within the right branch (22;52;82); and,
wherein step (i) comprises the step of:
(p) moving the confining means within the right branch to further hold pressurize the plastic material confined in the right branch and the right molding cavity.

12. A method according to claim 8, wherein the portion of the feed system within the center block further includes a runner stem (20;50;78,79) that divides into the left and right branches for feeding plastic material from the injection system to the left and right branches, and wherein the movable confining means (77) are located within the runner stem, and,
wherein step (n) comprises moving the confining means within the stem to further hold pressurize the plastic material confined in the left branch and the left molding cavity.

13. A method according to claim 12, wherein step (i) comprises the step of:
(q) moving the confining means within the stem to further hold pressurize the plastic material confined in the right branch and the right molding cavity.

14. A method according to claim 1 in which the adjustable feed system includes a runner stem (20;50;78,79) for receiving injected plastic material from the injection system, the confining means is provided in the runner stem for confining injected plastic material within the feed system; and a common movable packing means (30;60,62) is included in the center block (11;41;68;112) connected to the feed system between the confining means (27,34,35;57,58;85,86;105,106,107,108) and the left and right molding cavities (14,16;44,46;71,73;150,152) for applying hold pressure to plastic material withheld in at least a part of the feed system, the method comprising the further steps of:
(r) moving the common packing means to hold pressurize the injected plastic material confined in the left branch and the left molding cavity; and,
(s) moving the common packing means to hold pressurize the injected plastic material confined in the right branch and the right molding cavity.

15. A method according to claim 1, comprising the further steps of:
(t) locking one of the molding cavities (14,16;44,46;71,73;150,152) to maintain it in a closed position while hold pressure is being applied thereto and while the other molding cavity is open; and,
(u) applying axial clamping force to the locked molding cavity by expanding the thickness of at least one of the molding blocks (10,11,12;40,41,42;67,68,69;110,112,114) that defines the locked molding cavity.

16. A method according to claim 1, in which the molding system includes first means (120,122) for moving the left, center and right molding blocks (10,11,12;40,41,42;67,68,69;110,112,114) along the common axis with respect to each other for desynchronously opening and closing the left and right molding cavities (14,16;44,46;71,73;150,152) by retracting the first means, and for simultaneously clamping both molding cavities in a closed position by protracting the first means; and second means for locking one molding cavity in a closed position while both molding cavities are clamped in a closed position and for maintaining the one molding cavity in a closed position while the other molding cavity is in an open position, the method comprising the further steps of:
(v) locking one molding cavity in a closed position while both molding cavities are clamped in a closed position by the first means,
(w) maintaining the one molding cavity in a locked-closed position after the other molding cavity is opened; and,
(x) while the first means is retracted to open the other molding cavity, expanding the thickness of at least one of the molding blocks that defines the one molding cavity in order to provide axial clamping force to the one molding cavity that is maintained in a closed position by the second means after the other molding cavity is opened.

17. A system for controlling hold pressure applied to molding cavities (14,16;44,46;71,73;150,152) of a stacked multi-parting injection molding system having desynchronized injection periods, including left, center and right molding blocks (10,11,12;40,41,42;67,68,69;110,112,114) disposed for movement with respect to each other along a common axis and defining a left molding cavity (14;44;71;150) between the center and left molding blocks and a right molding cavity (16;46;73;152) between the center and right molding blocks, when cyclic injection molding a plastic material by utilizing a combination of the center block (11;41;68;112) and an injection system which together encompass an adjustable feed system that is separated during the molding cycle by the injection system (18;48;74;96,97) being separated from the center block, the feed system having within the center block a left branch (21;51;81) for feeding the left molding cavity, and a right branch (22;52;82) for feeding the right molding cavity, the system comprising:
(a) means for adjusting the feed system to enable plastic material to be fed from the injection system through the left branch to the left molding cavity;
(b) means for pressurizing the injection system to inject the plastic material through the left branch to fill the left molding cavity;
(c) means for adjusting the feed system to enable plastic material to be fed from the injection system through the right branch to the right molding cavity;
(d) means for pressurizing the injection system to inject the plastic material through the right branch to fill the right molding cavity; and,
(e) means for separating the injection system from the center block at a time when the injection system is not being pressurized, the system being characterized by the feed system further including:
(f) means for confining the plastic material injected into the left branch and the left molding cavity;
(g) means for hold pressurizing the plastic material confined in the left branch and the left molding cavity;
(h) means for confining the plastic material injected into the right branch and the right molding cavity; and,
(i) means for hold pressurizing the plastic material confined in the right branch and the right molding cavity.

18. A system according to claim 17, comprising:
movable packing means (30;60,62;77) for hold pressurizing the plastic material confined in the respective branches and molding cavities; and,
means for moving the packing means to further hold pressurize the plastic material respectively confined in the left branch and the left molding cavity and the right branch and the right molding cavity.

19. A system according to claim 17,
wherein the confining means are movable; and,
wherein the system further includes means (76) for moving the confining means to further hold pressurize the plastic material confined in the left branch and the left molding cavity.

20. A system according to claim 19, wherein the confining means are located within the respective left and right branches; and,
wherein the system includes means for moving the confining means within the left branch to further hold pressurize the plastic material confined in the left branch and means for moving the confining means within the right branch to further hold pressurize the plastic material confined in the right branch.

21. A system according to claim 19, wherein the portion of the feed system within the center molding block further includes a runner stem (20;50;78,79) that divides into the left and right branches for feeding plastic material from the injection system to the left and right branches;
wherein the confining means are located within the runner stem; and,
wherein the system includes means for moving the confining means in the runner stem to hold pressurize the plastic material respectively confined in the left branch and in the right branch.

22. A system according to claim 21, wherein the confining means include a one-way valve that allows plastic material to flow only toward the molding cavities.

23. A system according to claim 17, in which:
the adjustable feed system includes a runner stem (20;50;78,79) for receiving injected plastic material from the injection system (18;48;74;96,97), and the confining means is provided in the runner stem for confining injected plastic material within the feed system; and a common movable packing means is included in the center block connected to the feed system between the confining means and the left and right molding cavities for applying hold pressure to plastic material withheld in at least a part of the feed system, and the system further comprises:
means for moving the common packing means to hold pressurize the injected plastic material confined in the right branch and the right molding cavity.

24. A system according to claim 17, further comprising:
means (124,126,129,130,132) for locking one of the molding cavities to maintain it in a closed position while hold pressure is being applied thereto and while the other molding cavity is open; and,
means (146,148) for applying axial clamping force to the locked molding cavity by expanding the thickness of at least one of the molding blocks that defines the locked molding cavity.

25. A system according to claim 17, further comprising:
first means (120,122) for moving the left, center and right molding blocks along a common axis with respect to each other for desynchronously opening and closing the left and right molding cavities by retracting the first means, and for simultaneously clamping both molding cavities in a closed position by protracting the first means;
second means (124,126,128,130,132) for locking one molded cavity in a closed position while both molding cavities are clamped in a closed position and for maintaining the one molding cavity in a closed position while the other molding cavity is in an open position; and,
third means (146,148) for expanding the thickness of at least one of the molding blocks that defines the one molding cavity while the first means is retracted to open the other molding cavity in order to provide axial clamping force to the one molding cavity that is maintained in a closed position by the second means after the other molding cavity is opened.

26. A system according to claim 25, wherein said third means (146,148) are means for passively providing said axial clamping force, such as a spring (146).

27. A system according to claim 25, wherein said third means (146,148) are controllable means for actively providing said axial clamping force, such as a controllable hydraulic cylinder (148).

28. A system according to claim 25, further comprising:
fourth means (124,126,128,130,132) for locking the other molding cavity in a closed position while both molding cavities are clamped in a closed position and for maintaining the other molding cavity in a closed position while the one molding cavity is in an open position; and,
fifth means (146,148) for expanding the thickness of at least one of the molding blocks that defines the other molding cavity while the first means is retracted to open the one molding cavity in order to provide axial clamping force to the other molding cavity that is maintained in a closed position by the fourth means after the one molding cavity is opened.

29. A system according to claim 25, wherein the third means (146,148) are separate and apart from the second means (124,126,128,130,132).

30. A system according to claim 25, wherein the third means (146,148) are within at least one of the molding blocks that define the one molding cavity.

## Patentansprüche

1. Verfahren zur Nachdrucksteuerung von Formräumen (14, 16; 44, 46; 71, 73; 150, 152) eines gestapelten, mehrteiligen Einspritzformsystems mit zeitlich auseinanderliegenden Einspritzperioden, wobei das Einspritzformsystem linke, mittlere und rechte Formblöcke (10, 11, 12; 40, 41, 42; 67, 68, 69; 110, 112, 114) umfaßt, die zu einer aufeinander bezogenen Bewegung entlang einer gemeinsamen Achse vorgesehen sind und einen linken Formraum (14; 44; 71; 150) zwischen den mittleren und linken Formblöcken (11, 10; 40, 41; 68, 67; 112, 110) und einen rechten Formraum (16; 46; 73; 152) zwischen den mittleren und rechten Formblöcken (11, 12; 41, 42; 68, 69; 112, 114) beschreiben, eingesetzt bei zyklischer Einspritzung zur Formung eines plastischen Materials durch Verwendung einer Verbindung sowohl des mittleren Blocks (11; 41; 68; 112) als auch des Einspritzsystems (18; 48; 74), wobei beide zusammen ein einstellbares Zuführsystem bilden, das während des Formungszyklus vom Einspritzsystem (18; 48; 74; 96, 97) getrennt ist, welches wiederum vom mittleren Block getrennt ist, wobei das Zuführsystem innerhalb des mittleren Blocks einen linken Arm (21; 51; 81) zur Befüllung des linken Formraums und einen rechten Arm (22; 52; 82) zur Befüllung des rechten Formraums aufweist und das Verfahren
a) eine Einstellung des Zuführsystems vornimmt, um die Zuführung von plastischem Material vom Einspritzsystem durch den linken Arm zum linken Formraum zu ermöglichen;
b) eine Druckbeaufschlagung des Einspritzsystems vornimmt, um das plastische Material durch den linken Arm zum Füllen des linken Formraums einzuspritzen;
c) eine Einstellung des Zuführsystems vornimmt, um die Zuführung von plastischem Material vom Einspritzsystem durch den rechten Arm zum rechten Formraum zu ermöglichen;
d) eine Druckeaufschlagung des Einspritzsystems vornimmt, um das plastische Material durch den rechten Arm zum Füllen des rechten Formraums einzuspritzen und
e) eine Trennung des Einspritzsystems vom mittleren Block vornimmt, wenn das Einspritzsystem nicht nach b) oder d) druckbeaufschlagt ist;
**dadurch gekennzeichnet,**
daß das Zuführsystem im Inneren des mittleren Blocks Mittel zum Halten des eingespritzten plastischen Materials in den jeweiligen Armen und Formräumen (27; 34, 35; 57, 58; 85, 86; 105, 106, 107, 108) aufweist, und daß das Verfahren zusätzlich
f) das Halten des in den linken Arm und den linken Formraum eingespritzten plastischen Materials mit besagten Haltemitteln vornimmt;
g) das plastische Material unter Druckbeaufschlagung im linken Arm und dem linken Formraum hält;
h) das Halten des in den rechten Arm und den rechten Formraum eingespritzten plastischen Materials mit besagten Mitteln vornimmt und
i) das plastische Material unter Druckbeaufschlagung im rechten Arm und im rechten Formraum festhält.

2. Verfahren nach Anspruch 1,
**dadurch gekennzeichnet,**
daß das Formsystem zusätzlich bewegliche Packmittel (30; 60, 62; 77) im mittleren Block (11; 41; 68; 112) beinhaltet, um das in den jeweiligen Armen und Formräumen festgehaltene plastische Material unter Druckbeaufschlagung zu halten und daß g) j) zusätzlich umfaßt, wobei
j) die Bewegung der Packmittel vornimmt, um das im linken Arm (21; 51; 81) und dem linken Formraum (14; 44; 71; 150) festgehaltene Material unter zusätzlicher Druckbeaufschlagung zu halten und daß i) k) zusätzlich umfaßt, wobei
k) die Bewegung der Packmittel umfaßt, um das im rechten Arm (22; 52; 82) und im rechten Formraum (16; 46; 93; 152) gehaltene plastische Material unter zusätzlicher Druckbeaufschlagung zu halten.

3. Verfahren nach Anspruch 1,
**dadurch gekennzeichnet,**
daß das Formsystem zusätzlich bewegliche Packmittel (30; 60, 62; 77) im mittleren Bereich (11; 41; 68; 112) beinhaltet, um das im linken Arm (21; 51; 81) und im linken Formraum (14; 44; 71; 150) gehaltene plastische Material unter Druckbeaufschlagung zu halten, wobei unter g) zusätzlich
j) eine Bewegung der Packmittel zur weiteren Druckbeaufschlagung des im linken Arm und im linken Formraum gehaltenen plastischen Materials stattfindet.

4. Verfahren nach Anspruch 1,
**dadurch gekennzeichnet,**
daß das Formsystem zusätzlich linke und rechte bewegliche Packmittel (60, 62) im mittleren Bereich (11; 41; 68; 112) jeweils verbunden mit den linken und rechten Armen (21, 22; 51, 52; 81, 82) enthält, wobei g) j) zusätzlich umfaßt und
j) eine Bewegung des linken Packmittels (60) vornimmt, um das im linken Arm und im linken Formraum gehaltene plastische Material unter weiterer Druckbeaufschlagung zu halten und wobei zu i) k) zusätzlich hinzutritt und
k) eine Bewegung des rechten Packmittels (62) vornimmt, um das im rechten Arm und im rechten Formraum gehaltene plastische Material unter zusätzlicher Druckbeaufschlagung zu halten.

5. Verfahren nach Anspruch 1,
**dadurch gekennzeichnet,**
daß die linken und rechten Arme (21, 22; 51, 52; 81, 82) jeweils linke und rechte Einspritzöffnungen (100, 101) zur Zuführung des plastischen Materials von einer Einzeleinspritzeinheit (102) beinhalten und daß das Verfahren zusätzlich
l) eine Bewegung der Einspritzeinheit zur linken Öffnung (100) zum Einspritzen des plastischen Materials in den linken Arm und
m) eine Bewegung der Einspritzeinheit zur rechten Öffnung (101) zum Einspritzen des plastischen Materials in den rechten Arm vornimmt.

6. Verfahren nach Anspruch 1,
**dadurch gekennzeichnet,**
daß das Einspritzsystem linke und rechte Einspritzdüsen (103, 104) beinhaltet und daß die linken und rechten Arme jeweilige linke und rechte Einspritzöffnungen (100, 101) zur Zuführung des plastischen Materials vom Einspritzsystem beinhalten, wobei das Verfahren zusätzlich
l) plastisches Material in den linken Arm (21; 51; 81) aus der linken Düse (103) und
m) plastisches Material in den rechten Arm (22; 52; 82) aus der rechten Düse (104) einspritzt.

7. Verfahren nach Anspruch 1,
**dadurch gekennzeichnet,**
daß das Einspritzsystem eine Einzeleinspritzeinheit mit linken und rechten Einspritzdüsen beinhaltet und daß die linken und rechten Arme jeweilige linke und rechte Einspritzöffnungen zum Zuführen des plastischen Materials vom Einspritzsystem aufweisen und daß b) l) zusätzlich umfaßt, wobei
l) die Einspritzung des plastischen Materials in den linken Arm von der linken Düse vornimmt und daß d) m) zusätzlich umfaßt, wobei
m) die Einspritzung des plastischen Materials in den rechten Arm von der rechten Düse vornimmt.

8. Verfahren nach Anspruch 1,
**dadurch gekennzeichnet,**
daß die Haltemittel (77) beweglich sind und daß g) zusätzlich n) umfaßt, wobei
n) in einer Bewegung des Haltemittels besteht, um das im linken Arm (21; 51; 81) und im linken Formraum (14; 44; 71; 150) festgehaltene plastische Material unter zusätzlicher Druckbeaufschlagung zu halten.

9. Verfahren nach Anspruch 8,
**dadurch gekennzeichnet,**
daß i) o) umfaßt, wobei
o) aus einer Bewegung der Haltemittel (77) besteht, um das im rechten Arm und im rechten Formraum gehaltene plastische Material unter zusätzlicher Druckbeaufschlagung zu halten.

10. Verfahren nach Anspruch 8,
**dadurch gekennzeichnet,**
daß die Haltemittel (77) im linken Arm beweglich angebracht sind und daß
n) eine Bewegung der Haltemittel im linken Arm umfaßt, um das im linken Arm (21; 51, 81) und im linken Formraum (14; 44; 71; 150) gehaltene plastische Material unter zusätzlicher Druckbeaufschlagung zu halten.

11. Verfahren nach Anspruch 10,
**dadurch gekennzeichnet,**
daß die Haltemittel (77) auch im rechten Arm (22; 52; 82) beweglich sind und daß i) p) umfaßt, wobei
p) aus einer Bewegung im rechten Arm besteht, um das im rechten Arm und im rechten Formraum gehaltene plastische Material unter zusätzlicher Druckbeaufschlagung zu halten.

12. Verfahren nach Anspruch 8,
**dadurch gekennzeichnet,**
daß der Bereich des Zuführsystems im mittleren Block eine Zuführung (20; 50; 78, 79) beinhaltet, die sich in linke und rechte Arme zur Zuführung des plastischen Materials vom Einspritzsystem zu den linken und rechten Armen aufteilt, und daß die beweglichen Haltemittel (77) innerhalb der Zuführung angeordnet sind und daß
n) zusätzlich eine Bewegung der Haltemittel innerhalb der Zuführung umfaßt, um das im linken Arm und im linken Formraum gehaltene plastische Material unter zusätzlicher Druckbeaufschlagung zu halten.

13. Verfahren nach Anspruch 12,
**dadurch gekennzeichnet,**
daß i) q) umfaßt, wobei
g) in einer Bewegung der Haltemittel innerhalb der Zuführung besteht, um das im rechten Arm und im rechten Formraum gehaltene plastische Material unter zusätzlicher Druckbeaufschlagung zu halten.

14. Verfahren nach Anspruch 1,
**dadurch gekennzeichnet,**
daß das einstellbare Zuführsystem eine Zuführung (20; 50; 78, 79) zur Zuführung des vom Einspritzsystem eingespritzten Materials beinhaltet und daß das Haltemittel in der Zuführung zum Festhalten des eingespritzten plastischen Materials im Zuführsystem vorgesehen ist und daß der mittlere Block (11; 41; 68; 112) ein gemeinsames bewegliches Packmittel (30; 60, 62) beinhaltet, welches mit dem Zuführsystem zwischen den Haltemitteln (27, 34, 35; 57, 58; 85, 86; 105, 106, 107, 108) und den linken und rechten Formräumen (14, 16; 44, 46; 71, 73; 150, 152) verbunden ist, um das plastische Material, welches zumindest in einem Bereich des Zuführsystems zurückgehalten wird, mit Haltedruck zu beaufschlagen, wobei das Verfahren zusätzlich
r) aus einer Bewegung der Packmittel besteht, um das in den linken Arm und den linken Formraum eingespritzte, festgehaltene plastische Material unter zusätzlicher Druckbeaufschlagung zu halten und
s) eine Bewegung der gemeinsamen Packmittel vornimmt, um das im rechten Arm und im rechten Formraum eingespritzte, festgehaltene plastische Material unter zusätzlicher Druckbeaufschlagung zu halten.

15. Verfahren nach Anspruch 1,
**dadurch gekennzeichnet,**
daß zusätzlich
t) ein Verschließen eines der Formräume (14, 16; 44, 46; 71, 73; 150, 152) vorgenommen wird, um diesen geschlossen zu halten, während dieser mit Haltedruck beaufschlagt wird und während der andere Formraum offen ist und
u) eine axiale Klemmkraft auf den geschlossenen Formraum ausgeübt wird, in dem die Dicke wenigstens eines Formblocks (10, 11, 12; 40, 41, 42; 67, 68, 69; 110, 112, 114), welcher den geschlossenen Formraum beschreibt, erweitert wird.

16. Verfahren nach Anspruch 1,
**dadurch gekennzeichnet,**
daß das Formsystem zum einen Mittel A (120, 122) beinhaltet, mit denen der linke, mittlere und rechte Formblock (10, 11, 12; 40, 41, 42; 67, 68, 69; 110, 112, 114) entlang der gemeinsamen Achse unter Bezug aufeinander bewegt werden, um ein asynchrones Öffnen und Schließen der linken und rechten Formräume (14, 16; 44, 46; 71, 73; 150, 152) durch Zurückziehen der Mittel A vorzunehmen und gleichzeitig beide Formräume durch Vorschieben der Mittel A in einer geschlossenen Position zu verklemmen, und daß das Formsystem weitere Mittel B beinhaltet, um einen Formraum in einer geschlossenen Position zu verriegeln, während beide Formräume in einer geschlossenen Position verklemmt sind und um den einen Formraum in einer geschlossenen Position zu halten, während der andere Formraum Offen ist, wobei das Verfahren zusätzlich
v) ein Verschließen eines Formraums in einer geschlossenen Position vornimmt, während beide Formräume durch Mittel A in einer geschlossenen Position verklemmt werden;
w) ein Verschließen eines Formraums in einer arretiert-verschlossenen Position vornimmt, nachdem der andere Formraum geöffnet wurde und
x) eine Erweiterung der Dicke mindestens eines der Formblöcke vornimmt, die den einen Formraum beschreiben, um eine axiale Verklemmkraft auf den einen Formraum auszuüben, welche in einer geschlossenen Position durch die Mittel B gehalten wird, nachdem der andere Formraum geöffnet ist.

17. System zur Nachdrucksteuerung von Formräumen (14, 16; 44, 46; 71, 73; 150, 152) eines gestapelten, mehrteiligen Einspritzformsystems mit zeitlich auseinanderliegenden Einspritzperioden, wobei das Einspritzformsystem linke, mittlere und rechte Formblöcke (10, 11, 12; 40, 41, 42; 67, 68, 69; 110, 112, 114) umfaßt, die zu einer aufeinander bezogenen Bewegung entlang einer gemeinsamen Achse vorgesehen sind und einen linken Formraum (14; 44; 71; 150) zwischen den mittleren und linken Formblöcken (11, 10; 40, 41; 68, 67; 112, 110) und einen rechten Formraum (16; 46; 73; 152) zwischen den mittleren und rechten Formblöcken (11, 12; 41, 42; 68, 69; 112, 114) beschreiben, eingesetzt bei zyklischer Einspritzung zur Formung eines plastischen Materials durch Verwendung einer Verbindung sowohl des mittleren Blocks (11; 41; 68; 112) als auch des Einspritzsystems (18; 48; 74), wobei beide zusammen ein einstellbares Zuführsystem bilden, das während des Formzyklus vom Einspritzsystem (18; 48; 74; 96, 97) getrennt ist, welches wiederum vom mittleren Block getrennt ist, wobei das Zuführsystem innerhalb des mittleren Blocks einen linken Arm (21; 51; 81) zur Befüllung des linken Formraums und einen rechten Arm (22; 52; 82) zur Befüllung des rechten Formraums aufweisen und das Verfahren
a) Mittel zur Einstellung des Zuführsystems beinhaltet, um die Zuführung von plastischem Material vom Einspritzsystem durch den linken Arm zum linken Formraum zu ermöglichen;
b) Mittel zur Druckbeaufschlagung des Einspritzsystems beinhaltet, um das plastische Material durch den linken Arm zum Füllen des linken Formraums einzuspritzen;
c) Mittel zur Einstellung des Zuführsystems beinhaltet, um die Zuführung von plastischem Material vom Einspritzsystem durch den rechten Arm zum rechten Formraum zu ermöglichen;
d) Mittel zur Druckbeaufschlagung des Einspritzsystems beinhaltet, um das plastische Material durch den rechten Arm zum Füllen des rechten Formraums einzuspritzen und
e) Mittel zur Trennung des Einspritzsystems vom mittleren Block beinhaltet, wenn das Einspritzsystem nicht druckbeaufschlagt ist;
**dadurch gekennzeichnet,**
daß das System zusätzlich
f) Mittel zum Halten des in den linken Arm und den linken Formraum eingespritzten plastischen Materials mit besagten Haltemitteln beinhaltet;
g) Mittel zum Halten des plastischen Materials im linken Arm und dem linken Formraum gehalten wird unter Druckbeaufschlagung beinhaltet;
h) Mittel zum Halten des in den rechten Arm und den rechten Formraum eingespritzten plastischen Materials mit besagten Mitteln beinhaltet und
i) Mittel zum Festhalten des plastischen Materials unter Druckbeaufschlagung im rechten Arm enthält.

18. System nach Anspruch 17,
**dadurch gekennzeichnet,**
daß
- bewegliche Packmittel (30; 60, 62; 77) vorhanden sind, um das in das in den jeweiligen Armen und Formräumen gehaltene plastische Material unter Druckbeaufschlagung zu halten und
- Mittel zur Bewegung der Packmittel vorhanden sind, um das jeweils im linken Arm und linken Formraum bzw. im rechten Arm und rechten Formraum gehaltene plastische Material unter zusätzlicher Druckbeaufschlagung zu halten.

19. System nach Anspruch 17,
**dadurch gekennzeichnet,**
daß
- die Haltemittel beweglich sind und
- das System zusätzlich Mittel (76) beinhaltet, um die Haltemittel zu bewegen, um das im linken Arm und linken Formraum gehaltene plastische Material unter zusätzlicher Druckbeaufschlagung zu halten.

20. System nach Anspruch 19,
**dadurch gekennzeichnet,**
daß
- die Haltemittel jeweils im linken bzw. rechten Arm angeordnet sind und
- das System Mittel zur Bewegung der Haltemittel im linken Arm beinhaltet, Um das im linken Arm gehaltene plastische Material unter weiterer Druckbeaufschlagung zu halten und Mittel zur Bewegung der Haltemittel im rechten Arm beinhaltet, um das im rechten Arm gehaltene plastische Material unter weiterer Druckbeaufschlagung zu halten.

21. System nach Anspruch 19,
**dadurch gekennzeichnet,**
daß
- der Bereich das Zuführsystems innerhalb des Formblocks zusätzlich eine Zuführung (20; 50; 78, 79) beinhaltet, die sich in linke und rechte Arme zur Zuführung des plastischen Materials vom Einspritzsystem zu den linken und rechten Armen aufteilt,
- die Haltemittel im Inneren der Zuführung angeordnet sind und
- das System Mittel zur Bewegung der Haltemittel in der Zuführung beinhaltet, um das im linken Arm und rechten Arm gehaltene plastische Material unter Druckbeaufschlagung zu halten.

22. System nach Anspruch 21,
**dadurch gekennzeichnet,**
daß die Haltemittel ein Einwegventil beinhalten, welches sicherstellt, daß das plastische Material allein in Richtung der Formräume fließen kann.

23. System nach Anspruch 17,
**dadurch gekennzeichnet,**
daß
- das einstellbare Zuführsystem eine Zuführung (20; 50; 78, 79) zum Zuführen des eingespritzten Materials vom Einspritzsystem (18; 48; 74; 96, 97) beinhaltet;
- die Haltemittel in der Zuführung dafür vorgesehen sind, das eingespritzte plastische Material im Inneren des Zuführsystems zu halten und
- der mittlere Block ein gemeinsames bewegliches Packmittel beinhaltet, welches mit dem Zuführsystem zwischen den Haltemitteln und dem linken und rechten Formraum verbunden ist, um plastisches Material, welches in wenigstens einem Bereich des Zuführsystems zurückgehalten wird, zusätzlich mit Druck zu beaufschlagen und daß zusätzlich Mittel zur Bewegung der gemeinsamen Packmittel vorgesehen sind, um das im rechten Arm und im rechten Formraum gehaltene, eingespritzte plastische Material unter Druck zu beaufschlagen.

24. System nach Anspruch 17,
**dadurch gekennzeichnet,**
daß
- zusätzliche Mittel (124, 126, 129, 130, 132) zum Verschließen eines der Formräume vorhanden sind, um diesen während der Druckbeaufschlagung in einer geschlossenen Position zu halten, während der andere Formraum offen ist und
- zusätzliche Mittel (146, 148) zum Einbringen einer axialen Verklemmkraft auf den verschlossenen Formraum vorhanden sind, in dem die Dicke von wenigstens einem Formblock, der den geschlossenen Formraum beschreibt, erweitert wird.

25. System nach Anspruch 17,
**dadurch gekennzeichnet,**
daß
- zusätzliche Mittel A (120, 122) zur Bewegung des linken, mittleren und rechten Formblocks entlang einer gemeinsamen Achse unter Bezug zueinander vorhanden sind, um ein asynchrones Öffnen und Schließen der linken und rechten Formräume durch Zurückziehen der Mittel A zu ermöglichen und um gleichzeitig beide Formräume in einer geschlossenen Position durch Vorschieben der Mittel A zu verklemmen;
- zusätzliche Mittel B (124, 126, 128, 130, 132) zum Verschließen eines Formraums in einer geschlossenen Position vorhanden sind, während beide Formräume in einer geschlossenen Position verklemmt sind, um einen Formraum in einer geschlossenen Position zu halten, während der andere Formraum in einer offenen Position ist und
- zusätzliche Mittel C (146, 148) zum Erweitern der Dicke von wenigstens einem der Formblöcke, der einen Formraum beschreibt, vorhanden sind, während das Mittel A zurückgezogen ist, um den anderen Formraum zu öffnen und um eine axiale Verklemmkraft auf einen Formraum auszuüben, der in einer geschlossenen Position durch Mittel B gehalten wird, nachdem der andere Formraum geöffnet wurde.

26. System nach Anspruch 25,
**dadurch gekennzeichnet,**
daß besagte Mittel C (146, 148) Mittel sind, die passiv, ähnlich wie eine Feder (146), besagte axiale Verklemmkraft ausüben.

27. System nach Anspruch 25,
**dadurch gekennzeichnet,**
daß besagte Mittel C (146, 148) als steuerbare Mittel ausgebildet sind, z.B. als steuerbare Hydraulikzylinder (148), um aktiv die besagte axiale Verklemmkraft aufzubringen.

28. System nach Anspruch 25,
**dadurch gekennzeichnet,**
daß
- zusätzliche Mittel D (124, 126, 128, 130, 132) vorhanden sind, um den anderen Formraum in einer geschlossenen Position zu verschließen, während beide Formräume in einer geschlossenen Position verklemmt sind und um den anderen Formraum in einer geschlossenen Position zu halten, während der eine Formraum sich in einer offenen Position befindet und
- zusätzliche Mittel E (146, 148) vorhanden sind, um die Dicke von wenigstens einem der Formblöcke, der den anderen Formraum beschreibt, zu erweitern, während das Mittel A zurückgezogen ist, um einen der Formräume zu öffnen, um eine axiale Verklemmkraft auf den anderen Formraum auszuüben, welcher durch Mittel D in einer geschlossenen Position gehalten wird, nachdem einer der Formräume geöffnet ist.

29. System nach Anspruch 25,
**dadurch gekennzeichnet,**
daß die Mittel C (146, 148) getrennt und fernliegend von den Mitteln B (124, 126, 128, 130, 132) angeordnet sind.

30. System nach Anspruch 25,
**dadurch gekennzeichnet,**
daß die Mittel C (146, 148) sich in mindestens einem der Formblöcke befinden, die einen der Formräume beschreiben.

## Revendications

1. Procédé pour réguler le maintien en pression appliqué à des cavités de moule (14, 16 ; 44, 46 ; 71, 73 ; 150, 152) d'un système de moulage par injection par moules superposés et à plusieurs plans de joint, comportant des périodes d'injection désynchronisées, comprenant des blocs de moulage de gauche, centraux et de droite (10, 11, 12 ; 40, 41, 42 ; 67, 68, 69 ; 110, 112, 114) disposés de façon à pouvoir se déplacer les uns par rapport aux autres le long d'un axe commun et définissant une cavité de moule de gauche (14 ; 44 ; 71 ; 150) entre les blocs de moulage centraux et de gauche (11, 10 ; 41, 40 ; 68, 67 ; 112, 110) et une cavité de moule de droite (16 ; 46 ; 73 ; 152) entre les blocs de moulage centraux et de droite (11, 12 ; 41, 42 ; 68, 69 ; 112, 114), lors du moulage cyclique par injection d'une matière plastique par utilisation d'une combinaison du bloc central (11 ; 41 ; 68 ; 112) et d'un système d'injection (18 ; 48 ; 74), qui ensemble englobent un système d'alimentation réglable, qui est séparé pendant le cycle de moulage par la séparation, d'avec le bloc central, du système d'injection (18 ; 48 ; 74 ; 96 ; 97), le système d'alimentation ayant dans le bloc central une branche de gauche (21 ; 51 ; 81) pour alimenter la cavité de moule de gauche et une branche de droite (22 ; 52 ; 82) pour alimenter la cavité de moule de droite, procédé comprenant les étapes consistant :
(a) à ajuster le système d'alimentation pour permettre à une matière plastique d'être envoyée, à partir du système d'injection et par la branche de gauche, dans la cavité de moule de gauche ;
(b) à mettre le système d'injection sous pression pour injecter la matière plastique par la branche de gauche, pour remplir la cavité de moule de gauche ;
(c) à ajuster le système d'alimentation pour permettre à une matière plastique d'être envoyée à partir du système d'injection, par la branche de droite, à la cavité de moule de droite ;
(d) à mettre sous pression le système d'injection pour injecter la matière plastique par la branche de droite pour remplir la cavité de moule de droite ; et
(e) à séparer le système d'injection d'avec le bloc central, à un instant où le système d'injection n'est pas sous pression selon les étapes (b) ou (d) ;
ce procédé étant caractérisé en ce que le système d'alimentation comporte, à l'intérieur du bloc central, un moyen pour confiner la matière plastique injectée dans les différentes branches et les différentes cavités de moule (27, 34, 35 ; 57, 58 ; 85, 86 ; 105, 106, 107, 108), ce procédé comprenant en outre les étapes consistant :
(f) à confiner la matière plastique injectée dans la branche de gauche et dans la cavité de moule de gauche à l'aide du moyen de confinement ;
(g) à maintenir sous pression la matière plastique confinée dans la branche de gauche et la cavité de moule de gauche ;
(h) à confiner la matière plastique injectée dans la branche de droite et dans la cavité de moule de droite, à l'aide du moyen de confinement ; et
(i) à maintenir sous pression la matière plastique confinée dans la branche de droite et la cavité de moule de droite.

2. Procédé selon la revendication 1, dans lequel le système de moulage comprend en outre un moyen mobile de tassement (30 ; 60, 62 ; 77) dans le bloc central (11 ; 41 ; 68 ; 112) pour maintenir sous pression la matière plastique confinée dans les différentes branches et les différentes cavités de moule,
l'étape (g) comprenant en outre l'étape consistant :
(j) à déplacer le moyen de tassement pour poursuivre le maintien en pression de la matière plastique confinée dans la branche de gauche (21 ; 51 ; 81) et dans la cavité de moule de gauche (14 ; 44 ; 71 ; 150) ; et
où l'étape (i) comprend en outre l'étape consistant :
(k) à déplacer le moyen de tassement pour poursuivre le maintien en pression de la matière plastique confinée dans la branche de droite (22 ; 52 ; 82) et dans la cavité de moule de droite (16 ; 46 ; 93 ; 152).

3. Procédé selon la revendication 1, dans lequel le système de moulage comprend en outre un moyen mobile de tassement (30 ; 60 ; 62 ; 77) dans le bloc central (11 ; 41 ; 68 ; 112), pour maintenir sous pression la matière plastique confinée dans la branche de gauche (21 ; 51 ; 81) et dans la cavité de moule de gauche (14 ; 44 ; 71 ; 150),
où l'étape (g) comprend en outre l'étape consistant :
(j) à déplacer le moyen de tassement pour poursuivre le maintien en pression de la matière plastique confinée dans la branche de gauche et dans la cavité de moule de gauche.

4. Procédé selon la revendication 1, dans lequel le système de moulage comprend en outre des moyens mobiles de tassement de gauche et de droite (60, 62) dans le bloc central (11 ; 41 ; 68 ; 112), couplés respectivement à la branche de gauche et à la branche de droite (21, 22 ; 51, 52 ; 81, 82),
où l'étape (g) comprend en outre l'étape consistant :
(j) a déplacer le moyen de tassement de gauche (60) pour poursuivre le maintien en pression de la matière plastique confinée dans la branche de gauche et dans la cavité de moule de gauche ; et
où l'étape (i) comprend en outre l'étape consistant :
(k) à déplacer le moyen de tassement de droite (62) pour poursuivre le maintien en pression de la matière plastique confinée dans la branche de droite et dans la cavité de moule de droite.

5. Procédé selon la revendication 1, dans lequel les branches de gauche et de droite (21, 22 ; 51, 52 ; 81, 82) comprennent respectivement des orifices d'injection de gauche et de droite (100, 101), destinés à recevoir la matière plastique provenant d'une unité d'injection unique (102), le procédé comprenant en outre les étapes consistant :
(l) à déplacer l'unité d'injection vers l'orifice de gauche (100) pour injecter la matière plastique dans la branche de gauche ; et
(m) à déplacer l'unité d'injection vers l'orifice de droite (101) pour injecter la matière plastique dans la branche de droite.

6. Procédé selon la revendication 1, dans lequel le système d'injection comprend des buses d'injection de gauche et de droite (103, 104), et où les branches de gauche et de droite comprennent respectivement des orifices d'injection de gauche et de droite (100, 101) destinés à recevoir la matière plastique provenant du système d'injection, le procédé comprenant en outre les étapes consistant :
(l) à injecter la matière plastique dans la branche de gauche (21 ; 51 ; 81) à partir de la buse de gauche (103) ; et
(m) à injecter la matière plastique dans la branche de droite (22 ; 52 ; 82) à partir de la buse de droite (104).

7. Procédé selon la revendication 1, dans lequel le système d'injection comprend une unité d'injection unique comportant des buses d'injection de gauche et de droite, et où les branches de gauche et de droite comprennent respectivement des orifices d'injection de gauche et de droite, destinés à recevoir la matière plastique provenant du système d'injection,
où l'étape (b) comprend l'étape consistant :
(l) à injecter la matière plastique dans la branche de gauche par la buse de gauche ; et
où l'étape (d) comprend l'étape consistant :
(m) à injecter la matière plastique dans la branche de droite par la buse de droite.

8. Procédé selon la revendication 1, dans lequel le moyen de confinement (77) est mobile ; et
où l'étape (g) comprend l'étape consistant :
(n) à déplacer le moyen de confinement pour poursuivre le maintien en pression de la matière plastique confinée dans la branche de gauche (21 ; 51 ; 81) et dans la cavité de moule de gauche (14 ; 44 ; 71 ; 150).

9. Procédé selon la revendication 8, dans lequel l'étape (i) comprend l'étape consistant :
(o) à déplacer le moyen de confinement (77) pour poursuivre le maintien en pression de la matière plastique confinée dans la branche de droite et dans la cavité de moule de droite.

10. Procédé selon la revendication 8, dans lequel les moyens de confinement (77) sont mobiles à l'intérieur de la branche de gauche ; et
où l'étape (n) consiste à déplacer le moyen de confinement dans la branche de gauche pour poursuivre le maintien en pression de la matière plastique confinée dans la branche de gauche (21 ; 51 ; 81) et dans la cavité de moule de gauche (14 ; 44 ; 71 ; 150).

11. Procédé selon la revendication 10, dans lequel les moyens de confinement (77) sont de même mobiles à l'intérieur de la branche de droite (22 ; 52 ; 82) ; et
où l'étape (i) comprend l'étape consistant :
(p) à déplacer les moyens de confinement dans la branche de droite pour poursuivre le maintien en pression de la matière plastique confinée dans la branche de droite et dans la cavité de moule de droite.

12. Procédé selon la revendication 8, dans lequel la portion du système d'alimentation se trouvant à l'intérieur du bloc central comprend un canal secondaire d'injection (20 ; 50 ; 78, 79), qui se subdivise en la branche de gauche et la branche de droite, pour envoyer la matière plastique, à partir du système d'injection, dans la branche de gauche et la branche de droite, et où les moyens de confinement mobiles (77) sont situés à l'intérieur du canal secondaire d'injection, et
où l'étape (n) consiste à déplacer les moyens de confinement à l'intérieur du canal secondaire d'injection pour poursuivre le maintien en pression de la matière plastique confinée dans la branche de gauche et dans la cavité de moule de gauche.

13. Procédé selon la revendication 12, dans lequel l'étape (i) comprend l'étape consistant :
(q) à déplacer les moyens de confinement à l'intérieur du canal secondaire d'injection pour poursuivre le maintien en pression de la matière plastique confinée dans la branche de droite et la cavité de moule de droite.

14. Procédé selon la revendication 1, dans lequel le système d'alimentation réglable comprend un canal secondaire d'injection (20 ; 50 ; 78, 79), destiné à recevoir la matière plastique injectée provenant du système d'injection, le moyen de confinement est installé dans le canal secondaire d'injection pour confiner à l'intérieur du système d'alimentation la matière plastique injectée ; et un moyen de tassement, mobile et commun (30 ; 60, 62) est inclus dans le bloc central (11 ; 41 ; 68 ; 112), relié au système d'alimentation entre les moyens de confinement (27, 34, 35 ; 57, 58 ; 85, 86 ; 105, 106, 107, 108) et les cavités de moule de gauche et de droite (14, 16 ; 44, 46 ; 71, 73 ; 150, 152) pour appliquer le maintien en pression à la matière plastique retenue dans au moins une partie du système d'alimentation, ce procédé comprenant les étapes supplémentaires consistant :
(r) à déplacer le moyen de tassement commun pour maintenir sous pression la matière plastique injectée confinée dans la branche de gauche et dans la cavité de moule de gauche ; et
(s) à déplacer le moyen de tassement commun pour maintenir sous pression la matière plastique injectée confinée dans la branche de droite et dans la cavité de moule de droite.

15. Procédé selon la revendication 1, qui comprend les étapes supplémentaires consistant :
(t) à verrouiller l'une des cavités de moule (15, 16 ; 44, 46 ; 71, 73 ; 150, 152) pour la maintenir en position fermée pendant que le maintien en pression y est appliqué, et pendant que l'autre cavité de moule est ouverte ; et
(u) à appliquer une force axiale de serrage à la cavité de moule verrouillée, par augmentation de l'épaisseur d'au moins l'un des blocs de moulage (10, 11, 12 ; 40, 41, 42 ; 67, 68, 69 ; 110, 112, 114), qui définit la cavité de moule verrouillée.

16. Procédé selon la revendication 1, dans lequel le système de moulage comprend un premier moyen (120, 122) pour déplacer les blocs de moulage de gauche, centraux et de droite (10, 11, 12 ; 40, 41, 42 ; 67, 68, 69 ; 110, 112, 114) le long de l'axe commun les uns par rapport aux autres, pour ouvrir et fermer d'une manière désynchronisée les cavités de moule de gauche et de droite (14, 16 ; 44, 46 ; 71, 73 ; 150, 152) par escamotage du premier moyen, et pour serrer simultanément les deux cavités de moule dans une position fermée, par allongement du premier moyen ; et un deuxième moyen pour verrouiller une cavité de moule dans une position fermée, tandis que les deux cavités de moule sont serrées en position fermée, et pour maintenir l'une des cavités de moule dans une position fermée, l'autre cavité de moule étant en position ouverte, le procédé comprenant les étapes supplémentaires consistant :
(v) à verrouiller une cavité de moule en position fermée, les deux cavités de moule étant serrées en position fermée par le premier moyen ;
(w) à maintenir l'une des cavités de moule en position verrouillée et fermée, après ouverture de l'autre cavité de moule ; et
(x) tandis que le premier moyen est escamoté pour ouvrir l'autre cavité de moule, à augmenter l'épaisseur d'au moins l'un des blocs de moulage qui définit cette cavité de moule, pour réaliser une force axiale de serrage appliquée à la cavité de moule qui est maintenue en position fermée par le deuxième moyen après ouverture de l'autre cavité de moule.

17. Système pour réguler le maintien en pression appliqué à des cavités de moule (14, 16 ; 44, 46 ; 71, 73 ; 150, 152) d'un système de moulage par injection par moules superposés et à plusieurs plans de joint, comportant des périodes d'injection désynchronisées, comprenant des blocs de moulage de gauche, centraux et de droite (10, 11, 12 ; 40, 41, 42 ; 67, 68, 69 ; 110, 112, 114) disposés de façon à pouvoir se déplacer les uns par rapport aux autres le long d'un axe commun et définissant une cavité de moule de gauche (14 ; 44 ; 71 ; 150) entre les blocs de moulage centraux et de gauche et une cavité de moule de droite (16 ; 46 ; 73 ; 152) entre les blocs de moulage centraux et de droite, lors du moulage cyclique par injection d'une matière plastique par utilisation d'une combinaison du bloc central (11 ; 41 ; 68 ; 112) et d'un système d'injection, qui ensemble englobent un système d'alimentation réglable, qui est séparé pendant le cycle de moulage par la séparation, d'avec le bloc central, du système d'injection (18 ; 48 ; 74 ; 96 ; 97), le système d'alimentation ayant dans le bloc central une branche de gauche (21 ; 51 ; 81) pour alimenter la cavité de moule de gauche et une branche de droite (22 ; 52 ; 82) pour alimenter la cavité de moule de droite, système comprenant :
(a) un moyen pour ajuster le système d'alimentation, pour permettre à la matière plastique d'être envoyée du système d'injection, par la branche de gauche, à la cavité de moule de gauche ;
(b) un moyen pour mettre sous pression le système d'injection pour injecter la matière plastique par la branche de gauche et remplir la cavité de moule de gauche ;
(c) un moyen pour ajuster le système d'alimentation, pour permettre à la matière plastique d'être envoyée du système d'injection, par la branche de droite, à la cavité de moule de droite ;
(d) un moyen pour mettre sous pression le système d'injection, pour injecter la matière plastique par la branche de droite pour remplir la cavité de moule de droite ; et
(e) un moyen pour séparer le système d'injection du bloc central au moment où le système d'injection n'est pas sous pression, le système étant caractérisé par le fait que le système d'alimentation comprend en outre :
(f) un moyen pour confiner la matière plastique injectée dans la branche de gauche et dans la cavité de moule de gauche ;
(g) un moyen pour maintenir sous pression la matière plastique confinée dans la branche de gauche et dans la cavité de moule de gauche ;
(h) un moyen pour confiner la matière plastique injectée dans la branche de droite et dans la cavité de moule de droite ; et
(i) un moyen pour maintenir sous pression la matière plastique confinée dans la branche de droite et dans la cavité de moule de droite.

18. Système selon la revendication 17, comprenant :
un moyen de tassement mobile (30 ; 60, 62 ; 77) pour maintenir sous pression la matière plastique confinée dans les différentes branches et les différentes cavités de moule ; et
un moyen pour déplacer le moyen de tassement pour poursuivre le maintien en pression de la matière plastique confinée respectivement dans la branche de gauche et dans la cavité de moule de gauche, et dans la branche de droite et dans la cavité de moule de droite.

19. Système selon la revendication 17, dans lequel les systèmes de confinement sont mobiles ; et
où le système comprend en outre un moyen (76) pour déplacer les moyens de confinement dans le but de poursuivre le maintien en pression de la matière plastique confinée dans la branche de gauche et dans la cavité de moule de gauche.

20. Système selon la revendication 19, dans lequel les moyens de confinement sont situés respectivement à l'intérieur de la branche de gauche et de la branche de droite ; et
où le système comprend un moyen pour déplacer les moyens de confinement à l'intérieur de la branche de gauche pour poursuivre le maintien en pression de la matière plastique confinée dans la branche de gauche et un moyen pour déplacer les moyens de confinement à l'intérieur de la branche de droite pour poursuivre le maintien en pression de la matière plastique confinée dans la branche de droite.

21. Système selon la revendication 19, dans lequel la portion du système d'alimentation située à l'intérieur du bloc de moulage central comprend en outre un canal d'injection secondaire (20 ; 50 ; 78, 79), qui se subdivise en la branche de gauche et la branche de droite pour envoyer la matière plastique du système d'injection à la branche de gauche et à la branche de droite ;
où les moyens de confinement sont situés à l'intérieur du canal d'injection secondaire ; et
où le système comprend un moyen pour déplacer les moyens de confinement dans le canal secondaire d'injection, pour maintenir sous pression la matière plastique confinée respectivement dans la branche de gauche et dans la branche de droite.

22. Système selon la revendication 21, dans lequel les moyens de confinement comprennent une vanne à une voie qui ne permet à la matière plastique de s'écouler que vers les cavités de moule.

23. Système selon la revendication 17, dans lequel le système d'alimentation réglable comprend un canal secondaire d'injection (20 ; 50 ; 78, 79) destiné à recevoir la matière plastique injectée provenant du système d'injection (18 ; 48 ; 74 ; 96, 97), et le moyen de confinement est placé dans le canal secondaire d'injection pour confiner la matière plastique injectée dans le système d'injection ; et un moyen de tassement, mobile et commun, est inclus dans le bloc central relié au système d'alimentation entre les moyens de confinement et les cavités de moule de gauche et de droite, pour appliquer un maintien en pression à la matière plastique retenue dans au moins une partie du système d'alimentation, le système comprenant en outre :
un moyen pour déplacer le moyen de tassement commun, pour maintenir sous pression la matière plastique injectée confinée dans la branche de droite et dans la cavité de moule de droite.

24. Système selon la revendication 17, qui comprend en outre :
un moyen (124, 126, 129, 130, 132) pour verrouiller l'une des cavités de moule, pour la maintenir en position fermée pendant qu'un maintien en pression y est appliqué, l'autre cavité de moule étant ouverte ; et
un moyen (146, 148) pour appliquer une force de serrage axiale à la cavité de moule verrouillée, par augmentation de l'épaisseur d'au moins l'un des blocs de moulage qui définit la cavité de moule verrouillée.

25. Système selon la revendication 17, qui comprend en outre
un premier moyen (120, 122) pour déplacer les blocs de moulage de gauche, centraux et de droite, le long d'un axe commun les uns par rapport aux autres, pour ouvrir et fermer d'une manière désynchronisée les cavités de moule de gauche et de droite, par escamotage du premier moyen, et pour serrer simultanément les deux cavités de moule en position fermée, par allongement du premier moyen ;
un deuxième moyen (124, 126, 128, 130, 132), pour verrouiller une cavité de moule en position fermée, les deux cavités de moule étant serrées en position fermée, et pour maintenir l'une des cavités de moule en position fermée, l'autre cavité de moule étant en position ouverte ; et
un troisième moyen (146, 148) pour augmenter l'épaisseur d'au moins l'un des blocs de moulage qui définit l'une des cavités de moule pendant que le premier moyen est escamoté pour ouvrir l'autre cavité de moule pour appliquer une force de serrage axiale à la cavité de moule qui est maintenue en position fermée par le deuxième moyen après ouverture de l'autre cavité de moule.

26. Système selon la revendication 25, dans lequel le troisième moyen (146, 148) est constitué de moyens pour assurer d'une manière passive la force de serrage axiale, par exemple un ressort (146).

27. Système selon la revendication 25, dans lequel les troisièmes moyens (146, 148) sont des moyens réglables permettant d'appliquer d'une manière active une force de serrage axiale, par exemple un vérin hydraulique réglable (148).

28. Système selon la revendication 25, qui comprend en outre
un quatrième moyen (124, 126, 128, 130, 132) pour verrouiller l'autre cavité de moule en position fermée, les deux cavités de moule étant serrées en position fermée, et pour maintenir l'autre cavité de moule en position fermée, la première cavité de moule étant en position ouverte ; et
un cinquième moyen (146, 148) pour augmenter l'épaisseur d'au moins l'un des blocs de moulage qui définit l'autre cavité de moule, le premier moyen étant escamoté pour ouvrir la cavité de moule pour appliquer une force de serrage axiale à l'autre cavité de moule, qui est maintenue en position fermée par le quatrième moyen après ouverture de la première cavité de moule.

29. Système selon la revendication 25, dans lequel les troisièmes moyens (146, 148) sont séparés et distincts des deuxièmes moyens (124, 126, 128, 130, 132).

30. Système selon la revendication 25, dans lequel les troisièmes moyens (146, 148) se trouvent à l'intérieur d'au moins l'un des blocs de moulage qui définit la première cavité de moule.
